# EUROPEAN PATENT APPLICATION

(11) **EP 4 793 684 A1**
(43) Date of publication of application: **19.08.2026**
(21) Application number: 24880189.6
(22) Date of filing: 18.10.2024
(51) Int. Cl.: G02B 13/00, G02B 13/18, G02B 9/60, H04N 23/57, G02B 3/00

(54) **LENS ASSEMBLY AND ELECTRONIC DEVICE COMPRISING SAME**

(30) Priority: 18.10.2023 KR 20230139424; 08.11.2023 KR 20230153921
(71) Applicant: Samsung Electronics Co., Ltd., Suwon-si, Gyeonggi-do 16677 (KR)
(72) Inventor: SEO, Jungpa, Suwon-si Gyeonggi-do 16677 (KR)
(74) Representative: HGF
(86) International application number: PCT/KR2024/015892
(87) International publication number: WO 2025/084852

(57) **Abstract**

According to an embodiment of the present disclosure, an electronic device may be provided. The electronic device may include a lens assembly. The lens assembly may comprise: a lens group including multiple lenses aligned along an optical axis in a direction from an object side toward an image side; an image sensor including an imaging plane on which an image is formed; and at least one reflective member (M). Among the multiple lenses, the first lens from the object may have positive refractive power, the first lens may have at least one surface formed to be aspherical from among the surface that faces the object side and the surface that faces the image side, and the first lens' surface that faces the object side may be formed to be convex. Among at least one lens having negative refractive power included in the lens group, the lens closest to the object side may have at least one surface formed to be aspherical from among the surface that faces the object side and the surface that faces the image side, and the surface that faces the image side may be formed to be concave. Various other embodiments are also possible.

## Description

### [Technical Field]

Embodiments of the disclosure relate to a lens assembly and an electronic device including the same.

### [Background Art]

Optical devices, e.g., cameras capable of capturing images or videos have been widely used. Conventional film-type optical devices are being recently replaced with digital cameras or video cameras with a solid image sensor, such as charge coupled device (CCD) or complementary metal-oxide semiconductor (CMOS) because solid image sensor (CCD or CMOS)-adopted optical devices may easily save, copy, or move images as compared with film-type optical devices.

To obtain high-quality images and/or videos, the optical device may include an optical system including a lens assembly including a plurality of lenses and an image sensor having a high pixel count. The lens assembly may have a lower F-number (Fno) and smaller aberration, thereby making it possible to obtain high-quality (high resolution) images and/or videos. Obtaining a lower F number and smaller aberration, that is, a higher resolution and brighter images, calls for a combination of multiple lenses. If including more pixels, the image sensor may have a higher pixel count, and an image sensor with a higher pixel count may obtain higher-resolution images and/or videos. To implement a high-pixel image sensor in a limited mounting space in an electronic device, a plurality of pixels having a very small size, e.g., pixels in micrometers, may be disposed. Recently, an image sensor including tens of millions to hundreds of millions of micrometer pixels is being equipped in portable electronic devices, such as smartphones and tablets. Such a high-performance optical device may have an effect of attracting a user to purchase the electronic device.

The information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an electronic device may be provided. The electronic device may include a lens assembly. The lens assembly may include a lens group including a plurality of lenses aligned along an optical axis in a direction from an object side toward an image side, an image sensor including an imaging plane on which the image is formed, and at least one reflective member M. The first lens from the object side among the plurality of lenses may have a positive refractive power, at least one of a surface facing the object side or a surface facing the image side of the first lens may be formed as an aspherical surface, and the surface facing the object side of the first lens may be formed to be convex. A lens closest to the object side among at least one lens having a negative refractive power included in the lens group may have at least one of a surface facing the object side formed as an aspherical surface or a surface facing the image side formed as an aspherical surface, and the surface facing the image side may be formed to be concave. The lens assembly may satisfy following [Formula 1] to [Formula 3].$65 < L 1 Abbe < 81$$0.56 < EFL / OTTL < 1.33$ $5 < FOV < 28$
(where L1 Abbe of [Formula 1] is an Abbe number of the first lens L1 from the object side among the plurality of lenses, OTTL of [Formula 2] is a distance from a vertex of a surface facing the object side of the first lens L1 to the image sensor, EFL of [Formula 2] is a total focal length of the lens assembly, and FOV of [Formula 3] is a total field of view of the lens assembly)

According to an embodiment of the disclosure, a lens assembly may be provided. The lens assembly may include a lens group including a plurality of lenses aligned along an optical axis in a direction from an object side toward an image side, an image sensor including an imaging plane on which the image is formed, and at least one reflective member M. The first lens from the object side among the plurality of lenses may have a positive refractive power, at least one of a surface facing the object side or a surface facing the image side of the first lens may be formed as an aspherical surface, and the surface facing the object side of the first lens may be formed to be convex. A lens closest to the object side among at least one lens having a negative refractive power included in the lens group may have at least one of a surface facing the object side formed as an aspherical surface or a surface facing the image side formed as an aspherical surface, and the surface facing the image side may be formed to be concave. The lens assembly may satisfy following [Formula 1] to [Formula 3].$65 < L 1 Abbe < 81$$0.56 < EFL / OTTL < 1.33$$5 < FOV < 28$
(where L1 Abbe of [Formula 1] is an Abbe number of the first lens L1 from the object side among the plurality of lenses, OTTL of [Formula 2] is a distance from a vertex of a surface facing the object side of the first lens L1 to the image sensor, EFL of [Formula 2] is a total focal length of the lens assembly, and FOV of [Formula 3] is a total field of view of the lens assembly)

### [Brief Description of Drawings]

FIG. 1 is a block diagram illustrating an electronic device in a network environment according to an embodiment of the disclosure.
FIG. 2 is a block diagram illustrating a camera module according to an embodiment of the disclosure.
FIG. 3 is a front perspective view illustrating an electronic device according to an embodiment of the disclosure.
FIG. 4 is a rear perspective view illustrating an electronic device according to an embodiment of the disclosure.
FIG. 5A is a configuration diagram illustrating an optical system including a lens assembly and an image sensor according to an embodiment of the disclosure.
FIG. 5B is a graph illustrating spherical aberration of the lens assembly of FIG. 5A according to an embodiment of the disclosure.
FIG. 5C is a graph illustrating astigmatism of the lens assembly of FIG. 5A according to an embodiment of the disclosure.
FIG. 5D is a graph illustrating distortion of the lens assembly of FIG. 5A according to an embodiment of the disclosure.
FIG. 6A is a configuration diagram illustrating an optical system including a lens assembly and an image sensor according to an embodiment of the disclosure.
FIG. 6B is a graph illustrating spherical aberration of the lens assembly of FIG. 6A according to an embodiment of the disclosure.
FIG. 6C is a graph illustrating astigmatism of the lens assembly of FIG. 6A according to an embodiment of the disclosure.
FIG. 6D is a graph illustrating distortion of the lens assembly of FIG. 6A according to an embodiment of the disclosure.
FIG. 7A is a configuration diagram illustrating an optical system including a lens assembly and an image sensor according to an embodiment of the disclosure.
FIG. 7B is a graph illustrating spherical aberration of the lens assembly of FIG. 7A according to an embodiment of the disclosure.
FIG. 7C is a graph illustrating astigmatism of the lens assembly of FIG. 7A according to an embodiment of the disclosure.
FIG. 7D is a graph illustrating distortion of the lens assembly of FIG. 7A according to an embodiment of the disclosure.
FIG. 8A is a configuration diagram illustrating an optical system including a lens assembly and an image sensor according to an embodiment of the disclosure.
FIG. 8B is a graph illustrating spherical aberration of the lens assembly of FIG. 8A according to an embodiment of the disclosure.
FIG. 8C is a graph illustrating astigmatism of the lens assembly of FIG. 8A according to an embodiment of the disclosure.
FIG. 8D is a graph illustrating distortion of the lens assembly of FIG. 8A according to an embodiment of the disclosure.
FIG. 9A is a configuration diagram illustrating an optical system including a lens assembly and an image sensor according to an embodiment of the disclosure.
FIG. 9B is a graph illustrating spherical aberration of the lens assembly of FIG. 9A according to an embodiment of the disclosure.
FIG. 9C is a graph illustrating astigmatism of the lens assembly of FIG. 9A according to an embodiment of the disclosure.
FIG. 9D is a graph illustrating distortion of the lens assembly of FIG. 9A according to an embodiment of the disclosure.
FIG. 10A is a configuration diagram illustrating an optical system including a lens assembly and an image sensor according to an embodiment of the disclosure.
FIG. 10B is a graph illustrating spherical aberration of the lens assembly of FIG. 10A according to an embodiment of the disclosure.
FIG. 10C is a graph illustrating astigmatism of the lens assembly of FIG. 10A according to an embodiment of the disclosure.
FIG. 10D is a graph illustrating distortion of the lens assembly of FIG. 10A according to an embodiment of the disclosure.

Throughout the accompanying drawings, similar reference numerals may be assigned to similar parts, configurations, and/or structures.

### [Mode for Carrying out the Invention]

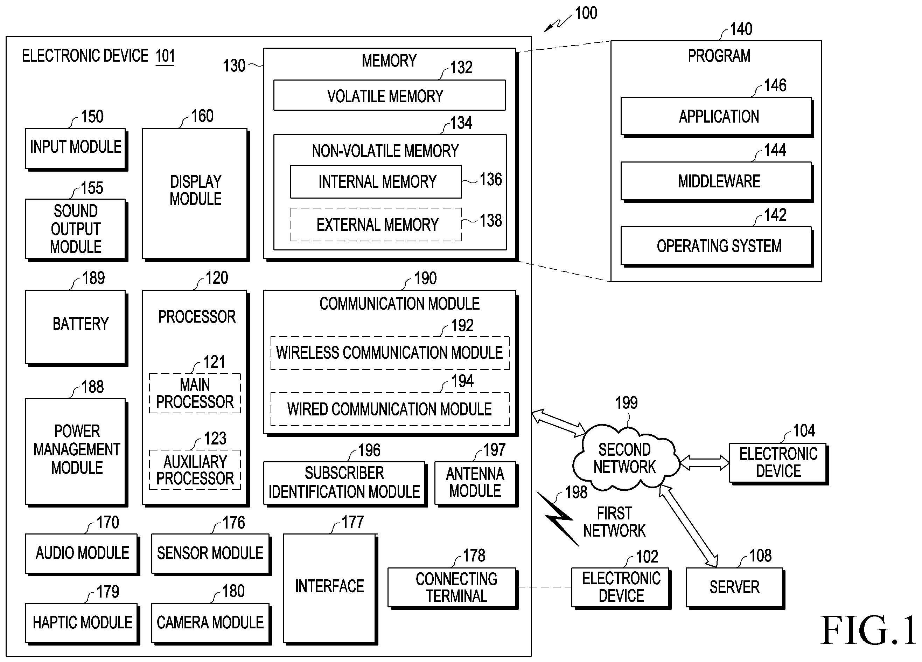

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

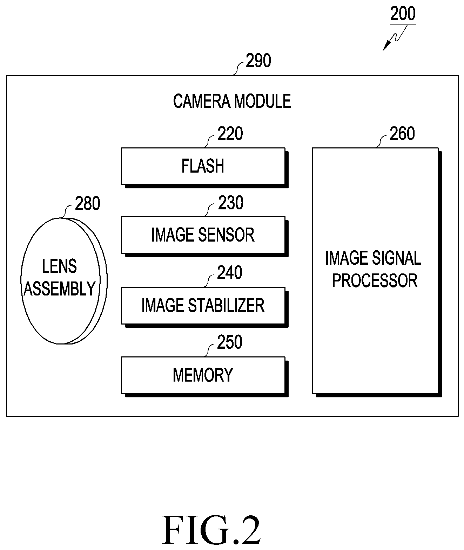

FIG. 2 is a block diagram 200 illustrating the camera module 290 (e.g., the camera module 180 of FIG. 1) according to embodiments of the disclosure. Referring to FIG. 2, the camera module 290 may include a lens assembly 280, a flash 220, an image sensor 230, an image stabilizer 240, memory 250 (e.g., buffer memory), or an image signal processor 260. In an embodiment, the lens assembly 280 may include the image sensor 230. The lens assembly 280 may collect light emitted or reflected from an object whose image is to be taken. The lens assembly 280 may include one or more lenses. According to an embodiment, the camera module 290 may include a plurality of lens assemblies 280. In this case, the camera module 290 may form, e.g., a dual-camera, a 360-degree camera, or a spherical camera. Some of the plurality of lens assemblies 280 may have the same lens attribute (e.g., field of view, focal length, autofocusing, f number, or optical zoom), or at least one lens assembly may have one or more lens attributes different from those of another lens assembly. The lens assembly 280 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 280 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, e.g., a charge coupled device (CCD) sensor or a complementary metal oxide semiconductor (CMOS) sensor.

The image stabilizer 240 may move the image sensor 230 or at least one lens included in the lens assembly 280 in a particular direction, or control an operational attribute (e.g., adjust the read-out timing) of the image sensor 230 in response to the movement of the camera module 290 or the electronic device 101 including the camera module 180. This makes it possible to compensate for at least some of the negative effects of the movement on the image being taken. According to an embodiment, the image stabilizer 240 may sense such a movement by the camera module 290 or the electronic device (e.g., the electronic device 101 of FIG. 1) using a gyro sensor (not shown) or an acceleration sensor (not shown) disposed inside or outside the camera module 290. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory (e.g., the memory 130 of FIG. 1) or as a separate memory that is operated independently from the memory.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 290. An image processed by the image signal processor 260 may be stored back in the memory 250 for further processing, or may be provided to an external component (e.g., the memory 130, the display module 160, the electronic device 102, the electronic device 104, or the server 108 of FIG. 1) outside the camera module 290. According to an embodiment, the image signal processor 260 may be configured as at least part of the processor (e.g., the processor 120 of FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device (e.g., the electronic device 101 of FIG. 1) may include a plurality of camera modules 290 having different attributes or functions. In such a case, at least one of the plurality of camera modules 290 may form, for example, a wide-angle camera and at least another of the plurality of camera modules may form a telephoto camera. Similarly, at least one of the plurality of camera modules 290 may be a front camera and at least another of the plurality of camera modules may be a rear camera.

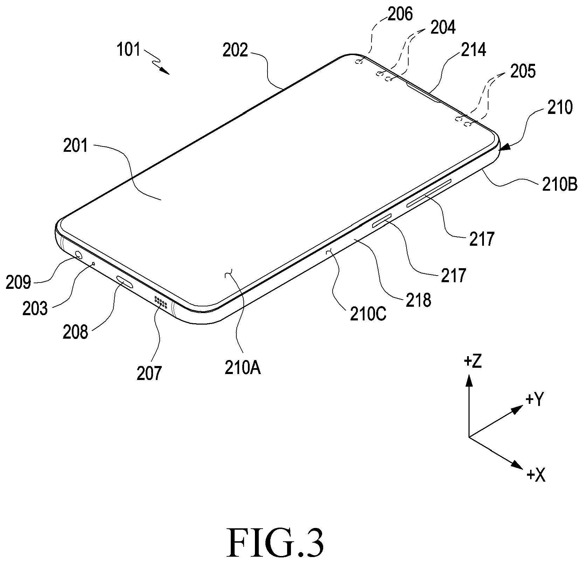

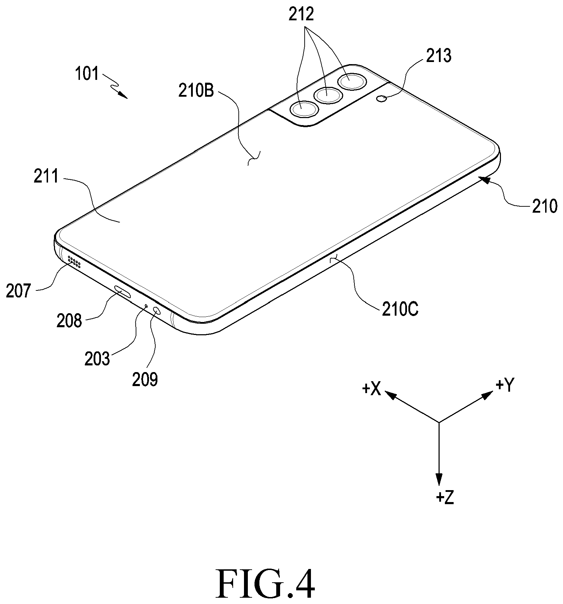

FIG. 3 is a front perspective view illustrating an electronic device according to an embodiment of the disclosure; FIG. 4 is a rear perspective view illustrating an electronic device according to an embodiment of the disclosure;

A configuration of the electronic device 101 of FIGS. 3 and 4 may be identical to all or a portion of a configuration of the electronic device 101 of FIG. 1.

Referring to FIGS. 3 and 4, according to an embodiment, an electronic device 101 may include a housing 210 including a first surface (or front surface) 210A, a second surface (or rear surface) 210B, and a side surface 210C surrounding the space between the first surface 210A and the second surfaces 210B. According to an embodiment (not illustrated), the housing 210 may denote a structure forming the first surface 210A of FIG. 2, the second surface 210B of FIG. 3, and some of the side surfaces 210C. According to an embodiment, the first surface 210A may be formed, at least in part, by a substantially transparent front plate 202 (e.g., a glass plate including various coating layers, or a polymer plate). The second surface 210B may be formed by a rear plate 211 that is substantially opaque. The rear plate 211 may be formed of, e.g., laminated or colored glass, ceramic, polymer, metal (e.g., aluminum, stainless steel (STS), or magnesium), or a combination of at least two thereof. The side surface 210C may be formed by a side structure (or "side bezel structure") 218 that couples to the front plate 202 and the rear plate 211 and includes a metal and/or polymer. In an embodiment, the rear plate 211 and the side structure 218 may be integrally formed together and include the same material (e.g., a metal, such as aluminum).

Although not shown, the front plate 202 may include area(s) that bend from at least a portion of an edge toward the rear plate 211 and seamlessly extend. In an embodiment, only one of the areas of the front plate 202 (or the rear plate 211), which bend to the rear plate 211 (or front plate 202) and extend may be included in one edge of the first surface 210A. According to an embodiment, the front plate 202 or rear plate 211 may be substantially flat and, in this case, may not include an area bending and extending. When an area bending and extending is included, the thickness of the electronic device 101 at the portion including the area bending and extending may be smaller than the thickness of the rest.

According to an embodiment, the electronic device 101 may include at least one of a display 201, an audio module (not illustrated) (e.g., the audio module 170 of FIG. 1) including at least one sound hole 203, 207, and 214, a sensor module 204 (e.g., the sensor module 176 of FIG. 1), camera modules 205, 212, and 213 (e.g., the camera module 180 of FIG. 1), a key input device 217 (e.g., the input module 150 of FIG. 1), or connector holes 208 and 209 (e.g., the connecting terminal 178 of FIG. 1). In an embodiment, the electronic device 101 may exclude at least one (e.g., the key input device 217 or the light emitting device 206) of the components or may add other components.

According to an embodiment, the display 201 may be visually revealed through, e.g., a majority portion of the front plate 202. In an embodiment, at least a portion of the display 201 may be visually exposed through the front plate 202 forming the first surface 210A or through a portion of the side surface 210C. In an embodiment, an edge of the display 201 may be formed to be generally the same as an adjacent outer shape of the front plate 202. In an embodiment (not illustrated), the interval between the outer edge of the display 201 and the outer edge of the front plate 202 may remain substantially even to give a larger area of visual exposure of the display 201.

In an embodiment (not illustrated), the screen display region of the display 201 may have a recess or opening in a portion thereof, and at least one or more of the sound hole 214, sensor module 204, camera module 205, and light emitting device 206 may be aligned with the recess or opening. In an embodiment (not illustrated), at least one or more of the sound hole 214, sensor module 204, camera module 205, fingerprint sensor (not illustrated), and light emitting device 206 may be included on the rear surface of the screen display area of the display 201. In an embodiment (not illustrated), the display 201 may be disposed to be coupled with, or adjacent, a touch detecting circuit, a pressure sensor capable of measuring the strength (pressure) of touches, and/or a digitizer for detecting a magnetic field-type stylus pen. In an embodiment, at least a portion of the sensor module 204 and/or at least a portion of the key input device 217 may be disposed on the side surface 210C.

According to an embodiment, the audio module (not illustrated) may include a microphone hole 203 and sound holes 207 and 214. A microphone for acquiring external sounds may be disposed in the microphone hole 203. In an embodiment, a plurality of microphones may be disposed to detect the direction of the sound. According to an embodiment, the sound holes 207 and 214 may include an external sound hole 207 and a phone receiver hole 214. In an embodiment, the sound holes 207 and 214 and the microphone hole 203 may be implemented as a single hole, or speakers may be included in the audio module without the sound holes 207 and 214 (e.g., piezo speakers).

According to an embodiment, the sensor module 204 may generate an electrical signal or a data value corresponding to an internal operating state of the electronic device 101 or an external environmental state. The sensor module 204 may include, e.g., a first sensor module 204 (e.g., a proximity sensor) and/or a second sensor module (not illustrated) (e.g., a fingerprint sensor) disposed on the front surface 210A of the housing 210. According to an embodiment, an additional sensor module may be disposed on the second surface 210B of the housing 210. The fingerprint sensor (not illustrated) may be disposed on the second surface 210B or side surface 210C as well as the first surface 210A (e.g., the display 201) of the housing 210. The electronic device 101 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 may include a first camera module 205 facing the first surface 210A of the electronic device 101, and a second camera module 212 and/or a flash 213 facing the second surface 210B. For example, the first camera module 205 and/or the second camera module 212 may include one or more lenses, an image sensor, and/or an image signal processor. According to an embodiment, some camera module 205 of the camera modules 205 and 212 and/or some sensor module (e.g., the sensor module 204) may be disposed to be exposed to the outside through at least a portion of the display 201. According to an embodiment, the first camera module 205 may include a punch hole camera disposed inside a hole or recess formed in the rear surface of the display 201. For example, the first camera module 205 may receive at least a portion of the light incident on the first surface 210A (or front surface) of the electronic device 101 through the display 201 inside the electronic device 101. According to an embodiment, the first camera module 205 and/or the sensor module 204 may be disposed to contact the external environment through a transparent area from the internal space of the electronic device 101 to the front plate 202 of the display 201. Further, some sensor module 204 may be disposed to perform its functions without being visually exposed through the front plate 202 in the internal space of the electronic device.

According to an embodiment, the second camera module 212 may be disposed inside the housing 210 so that the lens is exposed to the second surface 210B (or rear surface) of the electronic device 101. For example, the camera module 212 may be electrically connected to the printed circuit board (e.g., the printed circuit board 240a of FIG. 4). For example, the flash 213 may include a light emitting diode or a xenon lamp. In an embodiment, one or more lenses (an infrared (IR) camera, a wide-angle lens, and a telephoto lens) and image sensors may be disposed on one surface of the electronic device 101. In an embodiment, the flash 213 may radiate infrared light. For example, the infrared light radiated from the flash 213 and reflected by the object may be received through the sensor module (not illustrated) disposed on the second surface 210B of the housing 210. The electronic device 101 or the processor (e.g., the processor 180 of FIG. 1) may detect depth information about the object based on the time point when the infrared light is received from the third sensor module.

The camera modules 205, 212, and 213 are not limited to the above-described structure. Depending on the structure of the electronic device 101, various design changes may be made-e.g., only some of the camera modules may be mounted, or a new camera module may be added.

According to an embodiment, the electronic device 101 may include a plurality of camera modules (e.g., a dual camera or triple camera) having different attributes (e.g., angle of view) or functions. For example, a plurality of camera modules 205 and 212 including lenses having different angles of view may be configured, and the electronic device 101 may control to change the angle of view of the camera modules 205 and 212 performed by the electronic device 101 based on the user's selection. At least one of the plurality of camera modules 205 and 212 may form, for example, a wide-angle camera and at least another of the plurality of camera modules may form a telephoto camera. Similarly, at least one of the plurality of camera modules 205 and 212 may be a front camera and at least another of the plurality of camera modules may be a rear camera. Further, the plurality of camera modules 205 and 212 may include at least one of a wide-angle camera, a telephoto camera, and an infrared (IR) camera (e.g., a time of flight (TOF) camera, a structured light camera). According to an embodiment, the IR camera may be operated as at least a portion of the sensor module. For example, the TOF camera may be operated as at least a portion of a sensor module (not shown) for detecting the distance to the object.

According to an embodiment, the key input device 217 may be disposed on the side surface 210C of the housing 210. In an embodiment, the electronic device 101 may not include some or all of the above-mentioned key input device 217, and the key input device 217 not included may be implemented in another form such as a soft key on the display 201. In an embodiment, the key input device may include the sensor module disposed on the second surface 210B of the housing 210.

According to an embodiment, the light emitting device 206 may be disposed on the first surface 210A of the housing 210, for example. The light emitting device 206 may provide, e.g., information about the state of the electronic device 101 in the form of light. In an embodiment, the light emitting device 206 may provide a light source that interacts with, e.g., the process of the camera module 205. The light emitting device 206 may include, e.g., a light emitting diode (LED), an infrared (IR) LED, or a xenon lamp.

According to an embodiment, the connector holes 208 and 209 may include, e.g., a first connector hole 208 for receiving a connector (e.g., a universal serial bus (USB) connector) for transmitting or receiving power and/or data to/from an external electronic device and/or a second connector hole (e.g., an earphone jack) 209 for receiving a connector for transmitting or receiving audio signals to/from the external electronic device.

### [Embodiment 1]

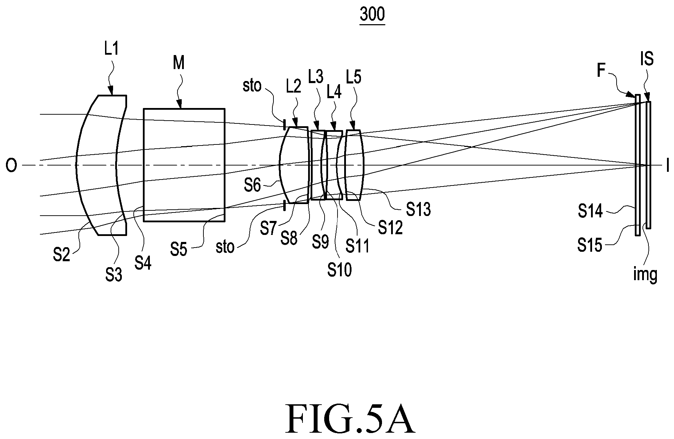

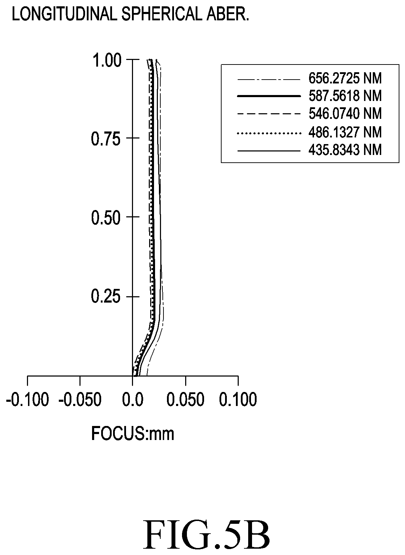

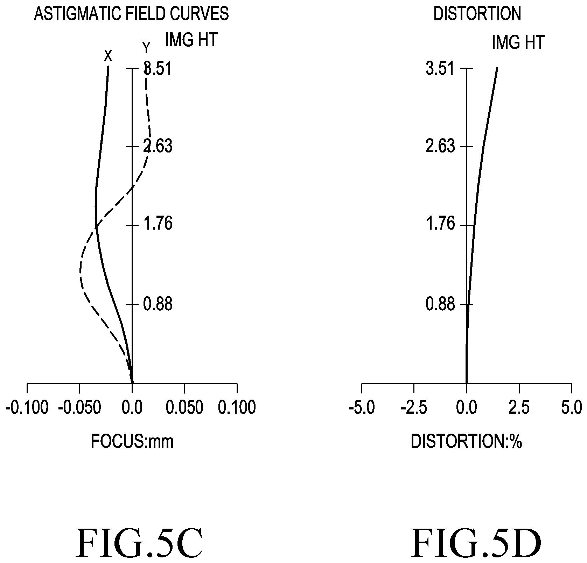

FIG. 5A is a configuration diagram illustrating an optical system including a lens assembly and an image sensor according to an embodiment of the disclosure. FIG. 5B is a graph illustrating spherical aberration of the lens assembly of FIG. 5A according to an embodiment of the disclosure. FIG. 5C is a graph illustrating astigmatism of the lens assembly of FIG. 5A according to an embodiment of the disclosure. FIG. 5D is a graph illustrating distortion of the lens assembly of FIG. 5A according to an embodiment of the disclosure.

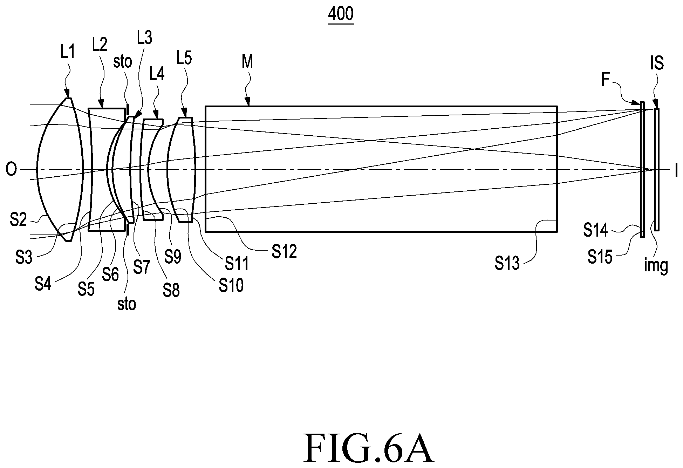

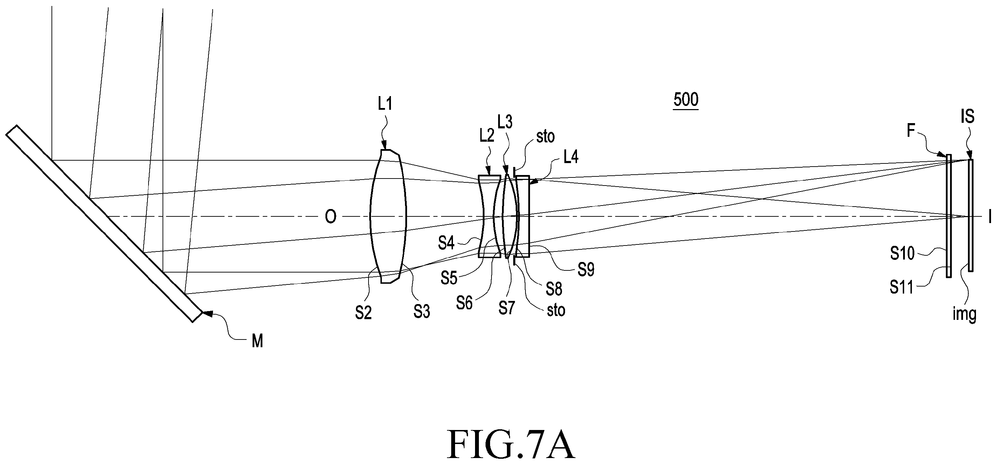

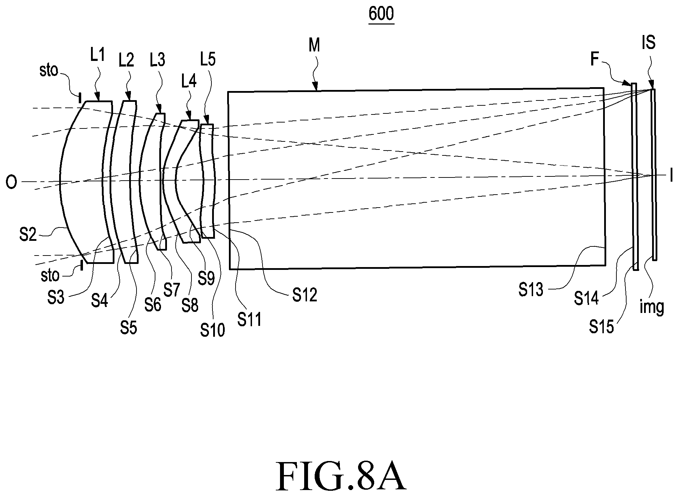

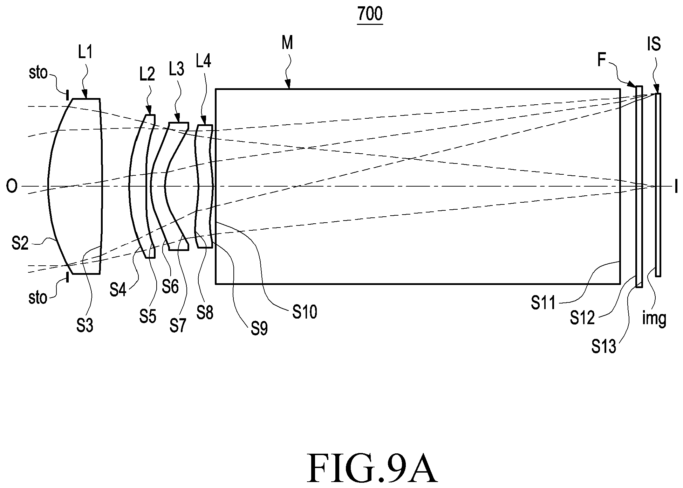

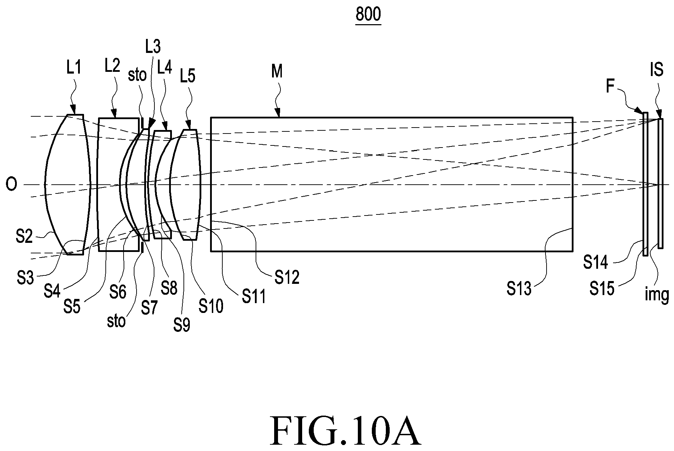

Referring to FIGS. 5A to 5D, in an embodiment, an electronic device (e.g., the electronic device 101 of FIGS. 1, 3 and 4) may include a lens assembly 300 (e.g., the lens assembly 280 of FIG. 2) (or an optical system). A lens assembly according to an embodiment of the disclosure (e.g., the lens assembly 300 of FIG. 5A, the lens assembly 400 of FIG. 6A, the lens assembly 500 of FIG. 7A, the lens assembly 600 of FIG. 8A, the lens assembly 700 of FIG. 9A and/or the lens assembly 800 of FIG. 10A) may constitute at least a part of a camera module (e.g., the camera module 180 of FIG. 1, the camera module 290 of FIG. 2, the camera module 205 of FIG. 3 and/or the camera module 212 of FIG. 4) of the electronic device 101.

According to an embodiment, the lens assembly 300 may be disposed on an optical axis O-I passing through centers of a plurality of lenses from an object (or external object) side to an image side. In describing the configuration of each lens below, 'object side' may denote the direction in which the object O is present, and 'image side' may denote the direction in which an imaging plane img where an image I forms is present.

According to an embodiment, the lens assembly 300 may include a lens group including a plurality (e.g., at least four or five) of lenses L1, L2, L3, L4, L5, at least one reflective member M, an aperture sto and/or an image sensor IS. According to an embodiment, the lenses L1, L2, L3, L4, L5 of the lens group, the aperture sto, the reflective member M and/or the image sensor IS may be substantially aligned on the optical axis O-I.

Referring to FIG. 5A, in an embodiment, the lens group or lenses L1, L2, L3, L4, L5 of the lens assembly 300 may include a first lens L1, a second lens L2, a third lens L3, a fourth lens L4 and a fifth lens L5 sequentially disposed and/or aligned along the optical axis O-I in a direction from the object O toward the image sensor IS. According to an embodiment, the lenses L1, L2, L3, L4, L5 and/or the reflective member M may each include an 'object-side surface' as a surface facing the object O and an 'image-side surface' as a surface facing the image I (or the image sensor IS). For example, the first lens L1 may include an object-side surface S2 and an image-side surface S3. For example, the reflective member M may include an object-side surface S4 and an image-side surface S5. The second lens L2 may include an object-side surface S6 and an image-side surface S7. The third lens L3 may include an object-side surface S8 and an image-side surface S9. The fourth lens L4 may include an object-side surface S10 and an image-side surface S11. The fifth lens L5 may include an object-side surface S12 and an image-side surface S13. According to an embodiment, the lenses L1, L2, L3, L4, L5 may be formed of glass and/or synthetic resin (e.g., plastic) material.

According to an embodiment, at least some of the lenses L1, L2, L3, L4, L5 may have at least one of an object-side surface or an image-side surface formed as an aspheric surface. For example, by forming the surfaces of the lenses L1, L2, L3, L4, L5 as aspheric surfaces, spherical aberration that may occur in the lens may be suppressed, occurrence of coma at a peripheral portion of the image sensor IS may be prevented, control of astigmatism may be facilitated, and occurrence of field curvature from a central portion to a peripheral portion of the imaging plane img of the image sensor IS may be decreased.

In the following detailed description, the shape of an object-side surface facing the object O side and/or an image-side surface facing the image sensor IS or the imaging plane img of the lenses L1, L2, L3, L4, L5 may be described using terms 'concave' or 'convex'. Such description of the shape of a surface of a lens may be a description of a shape of a point intersecting the optical axis O-I or a paraxial region intersecting the optical axis O-I. 'The object-side surface has a concave shape' may describe a shape in which a center of a radius of curvature of the object-side surface is located on the object O side. 'The object-side surface has a convex shape' may describe a shape in which a center of a radius of curvature of the object-side surface is located on the image sensor IS side. Thus, although one surface of a lens (e.g., the optical axis portion of the surface) is described as convex in shape, edge portions of the lens (e.g., portions a predetermined distance apart from the optical axis portion of the surface) may be concave. Likewise, although one surface of a lens (e.g., the optical axis portion of the surface) is described as concave in shape, edge portions of the lens (e.g., portions a predetermined distance apart from the optical axis portion of the surface) may be convex.

According to an embodiment, in an embodiment, the first lens (or a first lens) L1, as a lens closest to the object O side (or a first lens from the object side), may have a positive refractive power. According to an embodiment, the object-side surface S2 of the first lens L1 may have a convex shape. For example, a shape of the object-side surface S2 convex toward the object O side may suppress an increase in spherical aberration due to larger aperture of the lenses L1, L2, L3, L4, L5. According to an embodiment, at least one of the object-side surface S2 and the image-side surface S3 of the first lens L1 may be formed as an aspherical surface.

According to an embodiment, some of the lenses L1, L2, L3, L4, L5 including the first lens L1 may be an extra-low dispersing lens (or a super extra-low dispersing lens). For example, such an extra-low (or super extra-low) dispersing lens may be formed of a glass material formed to have a lower dispersion than ordinary glass to reduce chromatic aberration. According to an embodiment, by providing some of the lenses L1, L2, L3, L4, L5 of the lens assembly 300 as an extra-low (or super extra-low) dispersing lens, chromatic aberration may be minimized and resolution may be enhanced.

According to an embodiment, the lenses L1, L2, L3, L4, L5 may include at least one lens having a negative refractive power. According to an embodiment, at least one of a second lens L2 as a second lens from the object O side, a third lens L3 as a third lens, a fourth lens L4 as a fourth lens and a fifth lens L5 as a fifth lens may have a negative refractive power. According to an embodiment, a lens closest to the object O side among at least one lens(es) having a negative refractive power of the lenses L1, L2, L3, L4, L5 may have at least one of an object O side surface or an image-side surface formed as an aspherical surface. According to an embodiment, a lens closest to the object O side among at least one lens(es) having a negative refractive power may have an image-side surface with a concave shape.

In an embodiment, at least one of the lenses L1, L2, L3, L4, L5 and/or the image sensor IS may be configured to reciprocate along the optical axis O-I. According to an embodiment, the electronic device (e.g., the electronic device 101 of FIG. 1 and/or the electronic device 101 of FIGS. 3 and 4) or a processor (e.g., the processor 120 of FIG. 1) may be configured to focus or adjust a focal length by reciprocating the lenses L1, L2, L3, L4, L5 and/or the image sensor IS along the optical axis O-I.

According to an embodiment, the reflective member M may be disposed between the first lens L1 and the second lens L2. The reflective member M may be an optical member configured to refract and/or reflect light entering the image sensor IS after passing through the lens assembly 300. For example, a path of a chief ray of a bundle of light rays passing through the reflective member M may be parallel to a chief ray incident on the lens assembly 300. According to an embodiment, the reflective member M may include at least one mirror and/or at least one prism configured to refract and/or reflect light. For example, the reflective member M may be configured to change a path of light at least once. According to an embodiment, by including the reflective member M in the lens assembly 300, a folded optical system (or a folded camera) may be implemented. For example, by providing the lens assembly 300 with the reflective member M, a focal length of the lens assembly 300 may be secured in a limited accommodation space according to miniaturization and/or slimness of the electronic device (e.g., the electronic device 101 of FIGS. 3 and 4).

For example, when including a high-performance, large-sized image sensor IS, image quality of the electronic device (e.g., the electronic device 101 of FIGS. 3 and 4) may be enhanced. For example, a maximum image height (MAX IH) of the image sensor IS of the disclosure may have a size of about 2.8 mm to about 4.3 mm, or about 2.9 mm to about 4.2 mm. Here, the maximum image height (MAX IH) of the image sensor IS may mean a maximum value of half of a diagonal length of the image sensor IS. However, as the image sensor IS becomes larger, the lens assembly 300 corresponding thereto may be difficult to be mounted on a slimmer electronic device 101. For example, a thickness of the electronic device may be increased due to a length or width of the image sensor IS. Accordingly, according to an embodiment, by including at least one reflective member M in the lens assembly 300, design freedom regarding an arrangement direction of the lenses L1, L2, L3, L4, L5 or a disposition direction of the image sensor IS may be secured, and thus, even when the image sensor IS becomes larger, it may be easily mounted on a downsized and/or slimmer electronic device 101.

According to an embodiment, the aperture sto may be disposed between the reflective member M and the second lens L2, and may be disposed or implemented adjacent to one surface (e.g., the object-side surface S6) of the second lens L2. According to an embodiment, the aperture sto is disposed on the object O side with respect to some lenses L2, L3, L4, L5 of the lens group and may substantially define a region where light enters the lenses L2, L3, L4, L5. For example, the lenses L2, L3, L4, L5 are substantially disposed between the aperture sto and the image sensor IS and may focus light incident through the aperture sto and cause the light to enter the image sensor IS.

According to an embodiment, the image sensor IS may include an imaging plane img, which is a surface on which light at least partially focused through the aperture sto and/or the lenses L1, L2, L3, L4, L5 is received and an image is formed. According to an embodiment, the image sensor IS is a sensor mounted on a circuit board or the like and disposed in a state aligned with the optical axis, and may respond to light. The image sensor IS may include such a sensor as a complementary metal-oxide semiconductor (CMOS) or charge coupled device (CCD) sensor. The image sensor IS is not limited thereto and may include, e.g., various elements converting an object image into an electrical image signal. The image sensor IS may detect brightness, contrast ratio information, or color information about the object from the light which has been transmitted through the plurality of lenses, thereby obtaining an image for the object.

According to an embodiment, the lens assembly 300 may further include an infrared cut filter F. According to an embodiment, the infrared cut filter F may include an object-side surface S14 facing the object O and an image-side surface S15 facing the image sensor IS. For example, the infrared cut filter F may block light in a wavelength band (e.g., infrared) not identified by a user's naked eye but detected by a film or the image sensor IS. For example, in a lens assembly or the electronic device 101 for detecting infrared, the infrared cut filter F may be replaced with a pass filter transmitting infrared and blocking visible light. For example, the infrared cut filter F may be aligned with the plurality of lenses L1, L2, L3, L4, L5 of the lens group, the aperture sto and/or the image sensor IS along the optical axis O-I.

A radius, an effective focal length (EFL), f, total track length (TTL), surface distance (SD), a thickness of the lenses L1, L2, L3, L4, L5 of the disclosure or image height (IH) of the image sensor IS may all have a unit of mm unless otherwise designated. Further, the radius, effective focal length, TTL, SD, thickness of the lenses L1, L2, L3, L4, L5 or IH of the image sensor IS may be a distance measured from the optical axis O-I.

Hereinafter, [Formulas 1 to 5] for implementing the lens assembly 300 as a telephoto camera with minimized chromatic aberration according to an embodiment is described. According to an embodiment, the lens assembly 400 of FIG. 6A, the lens assembly 500 of FIG. 7A, the lens assembly 600 of FIG. 8A, the lens assembly 700 of FIG. 9A and the lens assembly 800 of FIG. 10A described below with reference to FIGS. 6A to 10D may also satisfy following [Formulas 1 to 5].

According to an embodiment, the lens assembly 300; 400; 500; 600; 700; 800 may satisfy following [Formula 1].$65 < L 1 Abbe < 81$

Here, L1 Abbe may be an Abbe number of a first lens L1 from the object O side among the plurality of lenses L1, L2, L3, L4, L5 of (or included in the lens group of) the lens assembly 300; 400; 500; 600; 700; 800.

According to an embodiment, when L1 Abbe of [Formula 1] is about 65 or less, chromatic aberration minimization performance of the lens assembly may be deteriorated. When L1 Abbe of [Formula 1] is about 81 or more, it may be difficult to manufacture the lenses of the lens assembly as aspherical.

According to an embodiment, the lens assembly 300; 400; 500; 600; 700; 800 may satisfy following [Formula 2].$0.56 < EFL / OTTL < 1.33$

Here, OTTL is a distance from a vertex of a surface facing the object O side of a first lens L1 from the object O side among the plurality of lenses L1, L2, L3, L4, L5 of the lens assembly 300; 400; 500; 600; 700; 800 to the image sensor IS, and EFL may be a total focal length of the lens assembly 300; 400; 500; 600; 700; 800.

According to an embodiment, when EFL/OTTL of [Formula 2] is about 0.56 or less, a size of the lens assembly may become larger, which may be contrary to slimming and miniaturization requirements of the lens assembly or the optical system. When EFL/OTTL of [Formula 2] is about 1.33 or more, manufacturing sensitivity of the lens assembly may increase.

According to an embodiment, the lens assembly 300; 400; 500; 600; 700; 800 may satisfy following [Formula 3].$5 < FOV < 28$

In [Formula 3], FOV may be a total field of view of the lens assembly. According to an embodiment, the lens assembly 300; 400; 500; 600; 700; 800 may be a folded optical system having a field of view greater than about 5 degrees and less than about 28 degrees.

According to an embodiment, the lens assembly 300; 400; 500; 600; 700; 800 may satisfy following [Formula 4].$18 < LM 1 Abbe < 40$

Here, LM1 Abbe may be an Abbe number of a lens closest to the object O side among at least one lens having a negative refractive power among the plurality of lenses L1, L2, L3, L4, L5.

According to an embodiment, when LM1 Abbe of [Formula 4] is about 18 or less, manufacturing of the lens may become difficult. When LM1 Abbe of [Formula 4] is about 40 or more, spherical aberration control may be difficult, and an increase in the number of lenses and deterioration in aberration control performance may occur.

According to an embodiment, the lens assembly 300; 400; 500; 600; 700; 800 may satisfy following [Formula 5].$2.0 < EFL / L 1 R 1 < 5.5$

Here, EFL is a total focal length of the lens assembly 300; 400; 500; 600; 700; 800, and L1R1 may be a curvature of a surface S2 facing the object side of the first lens L1.

According to an embodiment, when EFL/L1R1 of [Formula 5] is about 2.0 or less, a size of the lens assembly may become larger, which may be contrary to slimming and miniaturization requirements of the lens assembly or the optical system. When EFL/L1R1 of [Formula 5] is about 5.5 or more, spherical aberration sensitivity may increase, and accordingly, control of spherical aberration may be difficult and manufacturing difficulty of the lens assembly may increase.

[Table 1] below illustrates numerical values related to [Formulas 1 to 5] of the lens assembly 300 according to [Embodiment 1] and lens assemblies 400; 500; 600; 700; 800 according to [Embodiments 2 to 6] described below with reference to FIGS. 6A to 10D. Referring to [Table 1], it may be identified that the lens assemblies 300; 400; 500; 600; 700; 800 according to [Embodiments 1 to 6] satisfy [Formulas 1 to 5] described above.

**[Table 1]**

| | L1 ABBE | EFL/OTTL | LM1 ABBE | EFL/L1 R1 | FOV |
|---|---|---|---|---|---|
| embodiment 1 | 76.00 | 0.86 | 25.94 | 3.51 | 14.6 |
| embodiment 2 | 76.00 | 0.78 | 37.40 | 4.95 | 14.5 |
| embodiment 3 | 77.83 | 1.13 | 19.24 | 3.95 | 9.6 |
| embodiment 4 | 76.00 | 0.76 | 25.94 | 3.00 | 21.7 |
| embodiment 5 | 76.00 | 0.76 | 25.94 | 2.45 | 22.8 |
| embodiment 6 | 76.00 | 0.81 | 37.40 | 4.69 | 14.6 |

As such, the lens assembly 300; 400; 500; 600; 700; 800 according to an embodiment of the disclosure may be implemented as an optical system. According to an embodiment, such a lens assembly 300; 400; 500; 600; 700; 800 may be implemented by satisfying and optimizing [Formulas 1 to 5] described above. In an embodiment, the optical system including the lens assembly 400 may be manufactured to conform to conditions presented through shapes of the lenses L1, L2, L3, L4, L5 (e.g., lens surfaces) described above and [Formulas 1 to 5] described above and to have specifications exemplified in following [Table 2]. In [Table 2], lens surface 1 may exemplify a gap between the first lens L1 and the object O, and a measured value of its thickness may be a distance of the gap or an air gap.

The lens assembly 300 implemented with specifications of [Table 2] below may relate to a telephoto lens having a field of view (FOV) of about 14.61 degrees. Further, a total focal length (EFL) of the lens assembly 300 implemented with specifications of [Table 2] below is about 27 mm, an F-number (Fno) is about 4.869, an optical total length from image plane (OTTL) is about 31.229 mm, a maximum image height (Max IH) of the image sensor IS is about 3.5 mm, and a total field of view (FOV) may be about 14.61 degrees.

**[Table 2]**

| lens surface (Surface) | Radius of curvature (Radius) | Thickness | Glass material | H-APE | Overall focal length (EFL) | Refractive index (Nd) | Abbe number (Vd) |
|---|---|---|---|---|---|---|---|
| Object (O) | infinity | infinity | | | | | |
| 1 | infinity | 0.10000 | - | 3.60942 | | | |
| 2* | 7.69718 | 2.15194 | 406700.76 | 3.48000 | 47.799 | 1.40670 | 76 |
| 3* | 11.68633 | 1.50000 | - | 3.22769 | | | |
| 4 | infinity | 4.50000 | FD110_ HOYA | 2.81046 | infinity | 1.78472 | 25.72 |
| 5 | infinity | 3.00000 | - | 2.41704 | | | |
| 6*(sto) | 4.39194 | 1.60864 | APL5514 M'_PR | 2.10000 | 7.274 | 1.54444 | 55.92 |
| 7* | -36.67539 | 0.17833 | - | 2.06000 | | | |
| 8* | -31.80655 | 0.50000 | EP4500'_ PRIV | 1.90000 | -9.691 | 1.61444 | 25.94 |
| 9* | 7.45306 | 0.35691 | - | 1.70000 | | | |
| 10* | -17.23728 | 0.50000 | EP4500'_ PRIV | 1.70000 | -6.192 | 1.61444 | 25.94 |
| 11* | 4.99444 | 0.50000 | - | 1.70000 | | | |
| 12* | 16.66946 | 1.00000 | EP9000'_ PRIV | 1.70000 | 9.416 | 1.67075 | 19.24 |
| 13* | -10.11654 | 0.11478 | - | 1.71558 | | | |
| 14 | infinity | 14.83809 | - | 1.74651 | | | |
| 15 | infinity | 0.00000 | - | 2.30580 | | | |
| img | infinity | 0.21 | BSC7_ HOYA | 5.00000 | infinity | 1.51680 | 64.2 |

[Tables 3] and [Table 4] below list aspheric coefficients of the lenses L1, L2, L3, L4, L5, and the aspheric coefficients may be calculated through following [Equation 1].$z = \frac{c ′ {y}^{2}}{1 + \sqrt{1 - \left(K′+1\right) c {′}^{2} {y}^{2}}} + A {y}^{4} + B {y}^{6} + C {y}^{8} + D {y}^{10} + E {y}^{12} + F {y}^{14} + G {y}^{16} + H {y}^{18} + I {y}^{20} + K {y}^{22} + L {y}^{24} + M {y}^{26} + N {y}^{28} + O {y}^{30}$

Here, 'z' denotes a distance (sag) from a vertex of a lens in a direction of the optical axis O-I, 'c' denotes an inverse of a radius of curvature at a vertex of a lens, 'y' denotes a distance in a direction perpendicular to the optical axis, 'K' denotes a conic constant, and 'A', 'B', 'C', 'D', 'E', 'F', 'G', 'H', 'I', 'J', 'K', 'L', 'M', 'N', 'O' may denote aspheric coefficients, respectively.

**[Table 3]**

| lens surface (Surface) | S2 | S3 | S6 | S7 | S8 |
|---|---|---|---|---|---|
| Radius | 7.69718E+00 | 1.16863E+01 | 4.39194E+00 | -3.66754E+01 | -3.18065E+01 |
| K'(Conic) | -3.48475E+00 | 5.44012E+00 | 1.27614E-01 | -1.00000E+00 | -1.00000E+00 |
| A(4th)/C4 | 1.35539E-03 | 1.60855E-04 | 5.10792E-04 | 1.31490E-03 | -8.95206E-03 |
| B(6th)/C5 | -2.97839E-05 | 1.62158E-04 | 2.93886E-03 | 2.07394E-02 | 4.73063E-02 |
| C(8th)/C6 | 1.35694E-05 | -2.07926E-04 | -9.30202E-03 | -8.05629E-02 | -1.89578E-01 |
| D(10th)/C7 | -3.48398E-06 | 1.67493E-04 | 1.73668E-02 | 1.69531E-01 | 4.44938E-01 |
| E(12th)/C8 | 4.77573E-07 | -8.93353E-05 | -2.13946E-02 | -2.23352E-01 | -6.59615E-01 |
| F(14th)/C9 | -4.42569E-09 | 3.30156E-05 | 1.82861E-02 | 1.96868E-01 | 6.61174E-01 |
| G(16th)/C10 | -8.91615E-09 | -8.67547E-06 | -1.11608E-02 | -1.20181E-01 | -4.65966E-01 |
| H(18th)/C11 | 1.17299E-09 | 1.64184E-06 | 4.93305E-03 | 5.14206E-02 | 2.35277E-01 |
| J(20th)/C12 | -6.63409E-13 | -2.24218E-07 | -1.58237E-03 | -1.52697E-02 | -8.53564E-02 |
| K(22th)/C13 | -1.47818E-11 | 2.18811E-08 | 3.64645E-04 | 3.02438E-03 | 2.19726E-02 |
| L(24th)/C14 | 1.74900E-12 | -1.48754E-09 | -5.88144E-05 | -3.59843E-04 | -3.88858E-03 |
| M(26th)/C15 | -9.87925E-14 | 6.69105E-11 | 6.30215E-06 | 1.75145E-05 | 4.44725E-04 |
| N(28th)/C16 | 2.87429E-15 | -1.78991E-12 | -4.03015E-07 | 8.85698E-07 | -2.90312E-05 |
| O(30th)/C17 | -3.46406E-17 | 2.15631E-14 | 1.16418E-08 | -1.09948E-07 | 7.92343E-07 |

**[Table 4]**

| lens surface (Surface) | S9 | S10 | S11 | S12 | S13 |
|---|---|---|---|---|---|
| Radius | 7.45307E+00 | -1.72373E+01 | 4.99444E+00 | 1.66695E+01 | -1.01165E+01 |
| K'(Conic) | -2.91093E-01 | -1.00000E+00 | -1.00000E+00 | -1.00000E+00 | 1.34203E+00 |
| A(4th)/C4 | -6.63543E-03 | 6.18210E-03 | 3.62442E-03 | -1.87590E-03 | -1.48103E-03 |
| B(6th)/C5 | 2.66105E-02 | -1.36444E-02 | 1.91607E-04 | 1.75238E-03 | 2.59584E-03 |
| C(8th)/C6 | -1.35729E-01 | 3.84866E-02 | 3.72016E-03 | 1.61419E-02 | -3.71455E-03 |
| D(10th)/C7 | 3.64242E-01 | -1.11407E-01 | -5.54276E-03 | -7.40792E-02 | 1.18697E-03 |
| E(12th)/C8 | -5.60409E-01 | 2.91539E-01 | 3.15384E-03 | 1.71557E-01 | 5.29701E-03 |
| F(14th)/C9 | 5.26775E-01 | -5.46361E-01 | -8.35024E-04 | -2.53914E-01 | -1.10200E-02 |
| G(16th)/C10 | -2.90498E-01 | 6.95499E-01 | 8.53255E-05 | 2.58609E-01 | 1.16082E-02 |
| H(18th)/C11 | 6.10406E-02 | -6.10733E-01 | 0.00000E+00 | -1.86989E-01 | -7.91145E-03 |
| J(20th)/C12 | 3.55766E-02 | 3.75429E-01 | 0.00000E+00 | 9.69355E-02 | 3.70716E-03 |
| K(22th)/C13 | -3.54898E-02 | -1.61539E-01 | 0.00000E+00 | -3.58036E-02 | -1.20885E-03 |
| L(24th)/C14 | 1.44405E-02 | 4.77146E-02 | 0.00000E+00 | 9.19895E-03 | 2.70008E-04 |
| M(26th)/C15 | -3.31012E-03 | -9.22128E-03 | 0.00000E+00 | -1.56232E-03 | -3.94209E-05 |
| N(28th)/C16 | 4.17517E-04 | 1.05003E-03 | 0.00000E+00 | 1.57665E-04 | 3.38985E-06 |
| O(30th)/C17 | -2.26422E-05 | -5.33946E-05 | 0.00000E+00 | -7.15803E-06 | -1.30183E-07 |

FIG. 5B is a graph illustrating spherical aberration of the lens assembly 300 according to an embodiment of the disclosure, in which a horizontal axis represents a coefficient of longitudinal spherical aberration, a vertical axis represents a normalized distance from the optical axis O-I, and changes in longitudinal spherical aberration according to wavelength of light are illustrated. The longitudinal spherical aberration is illustrated for light having wavelengths of, e.g., 656.2725 (NM, nanometer), 587.5618 (NM), 546.0740 (NM), 486.1327 (NM) and 435.8343 (NM), respectively. FIG. 5C is a graph illustrating astigmatic field curves for light having a wavelength of 546.0740 (NM) of the lens assembly 300 according to an embodiment of the disclosure, in which 'X' exemplifies a sagittal plane, and 'Y' exemplifies a tangential plane or meridional plane. FIG. 5D is a graph illustrating distortion for light having a wavelength of 546.0740 (NM) of the lens assembly 300 according to an embodiment of the disclosure.

### [Embodiment 2]

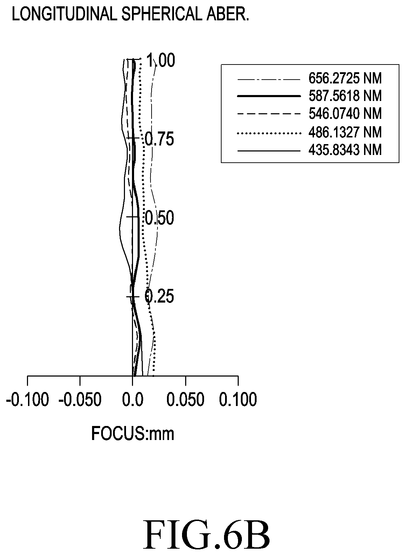

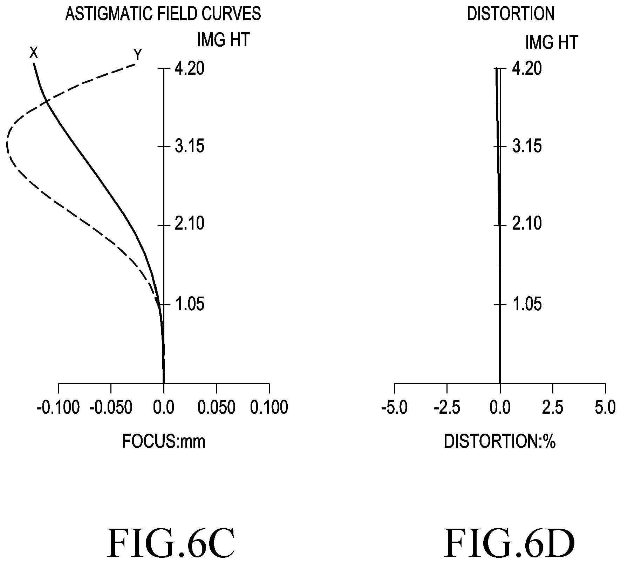

FIG. 6A is a configuration diagram illustrating an optical system including a lens assembly and an image sensor according to an embodiment of the disclosure. FIG. 6B is a graph illustrating spherical aberration of the lens assembly of FIG. 6A according to an embodiment of the disclosure. FIG. 6C is a graph illustrating astigmatism of the lens assembly of FIG. 6A according to an embodiment of the disclosure. FIG. 6D is a graph illustrating distortion of the lens assembly of FIG. 6A according to an embodiment of the disclosure.

FIG. 6B is a graph illustrating spherical aberration of the lens assembly 400 according to an embodiment of the disclosure, in which a horizontal axis represents a coefficient of longitudinal spherical aberration, a vertical axis represents a normalized distance from the optical axis O-I, and changes in longitudinal spherical aberration according to wavelength of light are illustrated. The longitudinal spherical aberration is illustrated for light having wavelengths of, e.g., 656.2725 (NM, nanometer), 587.5618 (NM), 546.0740 (NM), 486.1327 (NM) and 435.8343 (NM), respectively. FIG. 6C is a graph illustrating astigmatic field curves for light having a wavelength of 546.0740 (NM) of the lens assembly 400 according to an embodiment of the disclosure, in which 'X' exemplifies a sagittal plane, and 'Y' exemplifies a tangential plane or meridional plane. FIG. 6D is a graph illustrating distortion for light having a wavelength of 546.0740 (NM) of the lens assembly 400 according to an embodiment of the disclosure.

In an embodiment, a configuration of the lens assembly 500 may be at least partially identical or similar to a configuration of the lens assembly 300 described above with reference to FIG. 5A, and may satisfy [Formulas 1 to 5] described above.

Referring to FIG. 6A, the lens assembly 400 may include a lens group including a plurality (e.g., at least four or five) of lenses L1, L2, L3, L4, L5, at least one reflective member M, an aperture sto and/or an image sensor IS. According to an embodiment, the lenses L1, L2, L3, L4, L5 of the lens group, the aperture sto, the reflective member M and/or the image sensor IS may be substantially aligned on the optical axis O-I.

According to an embodiment, the lens group or lenses L1, L2, L3, L4, L5 of the lens assembly 400 may include a first lens L1, a second lens L2, a third lens L3, a fourth lens L4 and a fifth lens L5 sequentially disposed and/or aligned along the optical axis O-I in a direction from the object O toward the image sensor IS. According to an embodiment, the lenses L1, L2, L3, L4, L5 and/or the reflective member M may each include an 'object-side surface' as a surface facing the object O and an 'image-side surface' as a surface facing the image I (or the image sensor IS). According to an embodiment, the lenses L1, L2, L3, L4, L5 may be formed of glass and/or synthetic resin (e.g., plastic) material. According to an embodiment, at least some of the lenses L1, L2, L3, L4, L5 may have at least one of an object-side surface or an image-side surface formed as an aspheric surface.

According to an embodiment, in an embodiment, the first lens (or a first lens) L1, as a lens closest to the object O side (or a first lens from the object side), may have a positive refractive power. According to an embodiment, the object-side surface S2 of the first lens L1 may have a convex shape. For example, a shape of the object-side surface S2 convex toward the object O side may suppress an increase in spherical aberration due to larger aperture of the lenses L1, L2, L3, L4, L5. According to an embodiment, at least one of the object-side surface S2 and the image-side surface S3 of the first lens L1 may be formed as an aspherical surface.

According to an embodiment, some of the lenses L1, L2, L3, L4, L5 including the first lens L1 may be an extra-low dispersing lens (or a super extra-low dispersing lens). For example, such an extra-low (or super extra-low) dispersing lens may be formed of a glass material formed to have a lower dispersion than ordinary glass to reduce chromatic aberration. According to an embodiment, by providing some of the lenses L1, L2, L3, L4, L5 of the lens assembly 400 as an extra-low (or super extra-low) dispersing lens, chromatic aberration may be minimized and resolution may be enhanced.

According to an embodiment, the lenses L1, L2, L3, L4, L5 may include at least one lens having a negative refractive power. According to an embodiment, at least one of a second lens L2 as a second lens from the object O side, a third lens L3 as a third lens, a fourth lens L4 as a fourth lens and a fifth lens L5 as a fifth lens may have a negative refractive power. According to an embodiment, a lens closest to the object O side among at least one lens(es) having a negative refractive power of the lenses L1, L2, L3, L4, L5 may have at least one of an object O side surface or an image-side surface formed as an aspherical surface. According to an embodiment, a lens closest to the object O side among at least one lens(es) having a negative refractive power may have an image-side surface with a concave shape.

In an embodiment, at least one of the lenses L1, L2, L3, L4, L5 and/or the image sensor IS may be configured to reciprocate along the optical axis O-I. According to an embodiment, the electronic device (e.g., the electronic device 101 of FIG. 1 and/or the electronic device 101 of FIGS. 3 and 4) or a processor (e.g., the processor 120 of FIG. 1) may be configured to focus or adjust a focal length by reciprocating the lenses L1, L2, L3, L4, L5 and/or the image sensor IS along the optical axis O-I.

According to an embodiment, the reflective member M may be disposed between the fifth lens L5 and the image sensor IS. The reflective member M may be an optical member configured to refract and/or reflect light entering the image sensor IS after passing through the lens assembly 400. For example, a path of a chief ray of a bundle of light rays passing through the reflective member M may be parallel to a chief ray incident on the lens assembly 400. According to an embodiment, the reflective member M may include at least one mirror and/or at least one prism configured to refract and/or reflect light. For example, the reflective member M may be configured to change a path of light at least once. According to an embodiment, by including the reflective member M in the lens assembly 400, a folded optical system (or a folded camera) may be implemented.

According to an embodiment, the aperture sto may be disposed between the second lens L2 and the third lens L3, and may be disposed or implemented adjacent to one surface (e.g., the object-side surface S6) of the third lens L3. For example, the lenses L3, L4, L5 are substantially disposed between the aperture sto and the image sensor IS and may focus light incident through the aperture sto and cause the light to enter the image sensor IS.

According to an embodiment, the lens assembly 400 may further include an infrared cut filter F. According to an embodiment, the infrared cut filter F may include an object-side surface S14 facing the object O and an image-side surface S15 facing the image sensor IS. For example, in a lens assembly or the electronic device 101 for detecting infrared, the infrared cut filter F may be replaced with a pass filter transmitting infrared and blocking visible light. For example, the infrared cut filter F may be aligned with the plurality of lenses L1, L2, L3, L4, L5 of the lens group, the aperture sto and/or the image sensor IS along the optical axis O-I.

In an embodiment, the lens assembly 500 may be manufactured with specifications exemplified in following [Table 5], and may have aspheric coefficients of [Table 6] and [Table 7]. In [Table 5], lens surface 1 may exemplify a gap between the first lens L1 and the object O, and a measured value of its thickness may be a distance of the gap or an air gap.

A total focal length (EFL) of the lens assembly 400 implemented with specifications of [Table 5] below is about 33 mm, an F-number (Fno) is about 3.753, an optical total length from image plane (OTTL) is about 42.104 mm, a maximum image height (Max IH) of the image sensor IS is about 4.2 mm, and a total field of view (FOV) may be about 14.53 degrees.

**[Table 5]**

| lens surface (Surface) | Radius of curvature (Radius) | Thickness | Glass material | H-APE | Overall focal length (EFL) | Refractive index (Nd) | Abbe number (Vd) |
|---|---|---|---|---|---|---|---|
| Object (O) | infinity | infinity | | | | | |
| 1 | infinity | 0.00000 | - | 4.70724 | | | |
| 2* | 6.66532 | 3.07694 | 406700.76 | 4.50000 | 10.663 | 1.40670 | 76 |
| 3* | -10.84916 | 0.66105 | - | 4.30000 | | | |
| 4 | -28.33602 | 1.00000 | EP3500'_ PRIV | 3.76843 | -7.311 | 1.56717 | 37.4 |
| 5 | 4.95618 | 0.36084 | - | 3.24667 | | | |
| 6*(sto) | 6.64740 | 1.23177 | EP10000' _PRI | 3.24706 | 12.348 | 1.68042 | 18.15 |
| 7* | 28.07687 | 0.63850 | - | 3.16823 | | | |
| 8* | 27.44418 | 0.53796 | EP5000'_ PRIV | 3.06644 | -8.424 | 1.63490 | 23.96 |
| 9* | 4.47821 | 1.31224 | - | 2.89631 | | | |
| 10* | 9.08094 | 1.90886 | APL5514 M'_PR | 3.20000 | 12.398 | 1.54444 | 55.92 |
| 11* | -24.75218 | 0.70588 | - | 3.20000 | | | |
| 12 | infinity | 24.00000 | 629675.5853 | 3.24137 | infinity | 1.62967 | 58.53 |
| 13 | infinity | 0.70588 | - | 3.90254 | | | |
| 14 | infinity | 0.20000 | BK7_ SCHOTT | 3.93430 | infinity | 1.51680 | 64.17 |
| 15 | infinity | 5.76253 | - | 3.94022 | | | |
| img | infinity | 0.00174 | - | 4.20023 | | | |

[Tables 6] and [Table 7] below list aspheric coefficients of the lenses L1, L2, L3, L4, L5, and the aspheric coefficients may be calculated through [Equation 1] described above with reference to [Table 3] and [Table 4].

**[Table 6]**

| lens surface (Surface) | S2 | S3 | S4 | S5 | S6 |
|---|---|---|---|---|---|
| Radius | 6.66532E+00 | -1.08492E+01 | -2.83360E+01 | 4.95618E+00 | 6.64740E+00 |
| K'(Conic) | -6.49702E-01 | -1.00000E+00 | -9.41928E+00 | -1.42491E-02 | -1.37264E-02 |
| A(4th)/C4 | 1.96259E-04 | -2.89888E-04 | -2.52872E-05 | 2.68032E-03 | 3.20148E-05 |
| B(6th)/C5 | -2.45759E-04 | 3.66825E-04 | 2.60812E-05 | -2.61668E-03 | 3.08877E-04 |
| C(8th)/C6 | 1.43756E-04 | 9.71143E-05 | -1.45359E-05 | 1.25996E-03 | -3.22851E-04 |
| D(10th)/C7 | -4.50779E-05 | -1.11299E-04 | 5.00385E-06 | -3.56283E-04 | 2.15875E-04 |
| E(12th)/C8 | 8.80471E-06 | 3.93687E-05 | -1.46601E-06 | 6.29361E-05 | -1.02831E-04 |
| F(14th)/C9 | -1.14517E-06 | -8.15916E-06 | 3.79737E-07 | -7.01626E-06 | 3.33474E-05 |
| G(16th)/C10 | 1.02261E-07 | 1.12914E-06 | -7.42803E-08 | 4.77916E-07 | -7.27327E-06 |
| H(18th)/C11 | -6.32268E-09 | -1.09640E-07 | 1.02236E-08 | -1.81450E-08 | 1.06512E-06 |
| J(20th)/C12 | 2.67824E-10 | 7.60701E-09 | -9.71765E-10 | 2.95220E-10 | -1.03290E-07 |
| K(22th)/C13 | -7.51372E-12 | -3.76507E-10 | 6.24994E-11 | 0.00000E+00 | 6.36123E-09 |
| L(24th)/C14 | 1.29870E-13 | 1.30148E-11 | -2.59665E-12 | 0.00000E+00 | -2.25214E-10 |
| M(26th)/C15 | -1.18187E-15 | -2.99090E-13 | 6.28752E-14 | 0.00000E+00 | 3.48820E-12 |
| N(28th)/C16 | 3.64759E-18 | 4.11187E-15 | -6.73770E-16 | 0.00000E+00 | 0.00000E+00 |
| O(30th)/C17 | 0.00000E+00 | -2.56206E-17 | 0.00000E+00 | 0.00000E+00 | 0.00000E+00 |

**[Table 7]**

| lens surface (Surface) | S7 | S8 | S9 | S10 | S11 |
|---|---|---|---|---|---|
| Radius | 2.80769E+01 | 2.74442E+01 | 4.47821E+00 | 9.08095E+00 | -2.47522E+01 |
| K'(Conic) | 2.03438E+01 | 1.28844E+01 | -1.54707E-01 | 4.97671E+00 | 2.61642E+00 |
| A(4th)/C4 | -1.39992E-03 | -1.84787E-03 | -3.82795E-03 | -1.17199E-03 | 1.34042E-04 |
| B(6th)/C5 | 3.78362E-03 | 4.35112E-03 | 1.88879E-03 | -9.55269E-04 | -1.30268E-03 |
| C(8th)/C6 | -3.84558E-03 | -5.51818E-03 | -5.89043E-04 | 2.49890E-03 | 2.08912E-03 |
| D(10th)/C7 | 2.18272E-03 | 4.35648E-03 | 6.50503E-04 | -2.00318E-03 | -1.56661E-03 |
| E(12th)/C8 | -7.86198E-04 | -2.24738E-03 | -6.76976E-04 | 9.20087E-04 | 7.17134E-04 |
| F(14th)/C9 | 1.82634E-04 | 7.88075E-04 | 3.68289E-04 | -2.82471E-04 | -2.20678E-04 |
| G(16th)/C10 | -2.50567E-05 | -1.93572E-04 | -1.21807E-04 | 6.12242E-05 | 4.74966E-05 |
| H(18th)/C11 | 1.05673E-06 | 3.39189E-05 | 2.67825E-05 | -9.55520E-06 | -7.25165E-06 |
| J(20th)/C12 | 3.00874E-07 | -4.26453E-06 | -4.07298E-06 | 1.07502E-06 | 7.82630E-07 |
| K(22th)/C13 | -6.90342E-08 | 3.81694E-07 | 4.32305E-07 | -8.59718E-08 | -5.84042E-08 |
| L(24th)/C14 | 7.21281E-09 | -2.37175E-08 | -3.15109E-08 | 4.73161E-09 | 2.86783E-09 |
| M(26th)/C15 | -4.31812E-10 | 9.71161E-10 | 1.50443E-09 | -1.68468E-10 | -8.33750E-11 |
| N(28th)/C16 | 1.42879E-11 | -2.35300E-11 | -4.23471E-11 | 3.43020E-12 | 1.08740E-12 |
| O(30th)/C17 | -2.03470E-13 | 2.55222E-13 | 5.32139E-13 | -2.93116E-14 | 0.00000E+00 |

### [Embodiment 3]

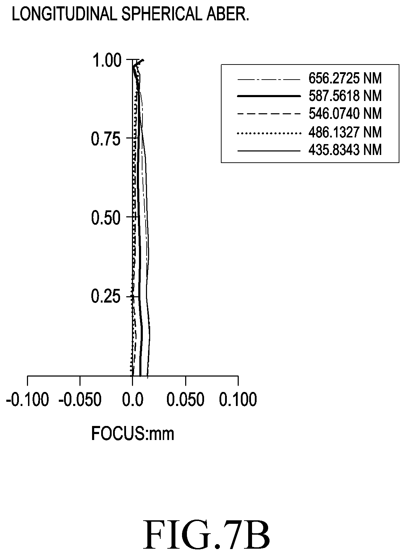

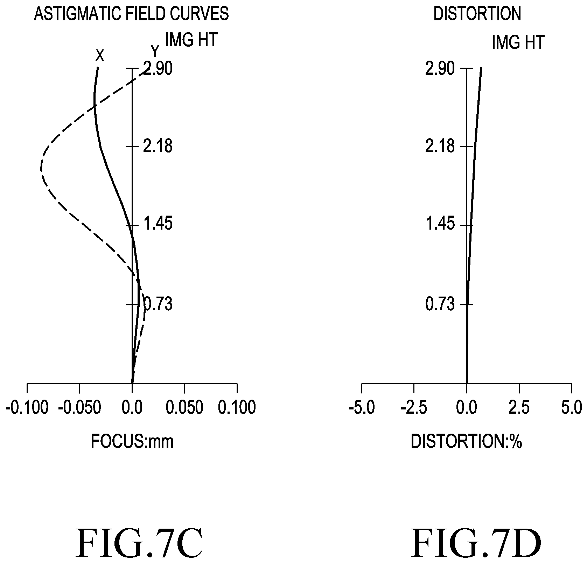

FIG. 7A is a configuration diagram illustrating an optical system including a lens assembly and an image sensor according to an embodiment of the disclosure. FIG. 7B is a graph illustrating spherical aberration of the lens assembly of FIG. 7A according to an embodiment of the disclosure. FIG. 7C is a graph illustrating astigmatism of the lens assembly of FIG. 7A according to an embodiment of the disclosure. FIG. 7D is a graph illustrating distortion of the lens assembly of FIG. 7A according to an embodiment of the disclosure.

FIG. 7B is a graph illustrating spherical aberration of the lens assembly 500 according to an embodiment of the disclosure, in which a horizontal axis represents a coefficient of longitudinal spherical aberration, a vertical axis represents a normalized distance from the optical axis O-I, and changes in longitudinal spherical aberration according to wavelength of light are illustrated. The longitudinal spherical aberration is illustrated for light having wavelengths of, e.g., 656.2725 (NM, nanometer), 587.5618 (NM), 546.0740 (NM), 486.1327 (NM) and 435.8343 (NM), respectively. FIG. 7C is a graph illustrating astigmatic field curves for light having a wavelength of 546.0740 (NM) of the lens assembly 500 according to an embodiment of the disclosure, in which 'X' exemplifies a sagittal plane, and 'Y' exemplifies a tangential plane or meridional plane. FIG. 7D is a graph illustrating distortion for light having a wavelength of 546.0740 (NM) of the lens assembly 500 according to an embodiment of the disclosure.

In an embodiment, a configuration of the lens assembly 500 may be at least partially identical or similar to a configuration of the lens assembly 300 described above with reference to FIG. 5A, and may satisfy [Formulas 1 to 5] described above.

Referring to FIG. 7A, the lens assembly 500 may include a lens group including a plurality (e.g., at least four) of lenses L1, L2, L3, L4, at least one reflective member M, an aperture sto and/or an image sensor IS. According to an embodiment, the lenses L1, L2, L3, L4 of the lens group, the aperture sto, the reflective member M and/or the image sensor IS may be substantially aligned on the optical axis O-I.

According to an embodiment, the lens group or lenses L1, L2, L3, L4 of the lens assembly 500 may include a first lens L1, a second lens L2, a third lens L3 and a fourth lens L4 sequentially disposed and/or aligned along the optical axis O-I in a direction from the object O toward the image sensor IS. According to an embodiment, the lenses L1, L2, L3, L4 and/or the reflective member M may each include an 'object-side surface' as a surface facing the object O and an 'image-side surface' as a surface facing the image I (or the image sensor IS). According to an embodiment, the lenses L1, L2, L3, L4 may be formed of glass and/or synthetic resin (e.g., plastic) material. According to an embodiment, at least some of the lenses L1, L2, L3, L4 may have at least one of an object-side surface or an image-side surface formed as an aspheric surface.

According to an embodiment, in an embodiment, the first lens (or a first lens) L1, as a lens closest to the object O side (or a first lens from the object side), may have a positive refractive power. According to an embodiment, the object-side surface S2 of the first lens L1 may have a convex shape. For example, a shape of the object-side surface S2 convex toward the object O side may suppress an increase in spherical aberration due to larger aperture of the lenses L1, L2, L3, L4. According to an embodiment, at least one of the object-side surface S2 and the image-side surface S3 of the first lens L1 may be formed as an aspherical surface.

According to an embodiment, some of the lenses L1, L2, L3, L4 including the first lens L1 may be an extra-low dispersing lens (or a super extra-low dispersing lens). For example, such an extra-low (or super extra-low) dispersing lens may be formed of a glass material formed to have a lower dispersion than ordinary glass to reduce chromatic aberration. According to an embodiment, by providing some of the lenses L1, L2, L3, L4 of the lens assembly 500 as an extra-low (or super extra-low) dispersing lens, chromatic aberration may be minimized and resolution may be enhanced.

According to an embodiment, the lenses L1, L2, L3, L4 may include at least one lens having a negative refractive power. According to an embodiment, at least one of a second lens L2 as a second lens from the object O side, a third lens L3 as a third lens and a fourth lens L4 as a fourth lens may have a negative refractive power. According to an embodiment, a lens closest to the object O side among at least one lens(es) having a negative refractive power of the lenses L1, L2, L3, L4 may have at least one of an object O side surface or an image-side surface formed as an aspherical surface. According to an embodiment, a lens closest to the object O side among at least one lens(es) having a negative refractive power may have an image-side surface with a concave shape.

In an embodiment, at least one of the lenses L1, L2, L3, L4 and/or the image sensor IS may be configured to reciprocate along the optical axis O-I. According to an embodiment, the electronic device (e.g., the electronic device 101 of FIG. 1 and/or the electronic device 101 of FIGS. 3 and 4) or a processor (e.g., the processor 120 of FIG. 1) may be configured to focus or adjust a focal length by reciprocating the lenses L1, L2, L3, L4 and/or the image sensor IS along the optical axis O-I.

According to an embodiment, the reflective member M may be disposed in front of the first lens L1. In other words, the reflective member M may be disposed facing the object-side surface S2 of the first lens L1. According to an embodiment, the reflective member M may be an optical member configured to change a path of incident light toward the lens assembly 500, and may include, e.g., at least one mirror. For example, the reflective member M may be configured to change a path of light at least once. According to an embodiment, the reflective member M may include a reflective surface inclined with respect to the optical axis O-I to change a path of incident light toward the lens assembly 500. For example, the reflective surface of the reflective member M may form an angle of about 25 degrees to about 45 degrees with respect to the optical axis O-I. For example, the reflective member M may be configured to change a path of light at least once.

According to an embodiment, the aperture sto may be disposed between the third lens L3 and the fourth lens L4, and may be disposed or implemented adjacent to one surface (e.g., the object-side surface S8) of the fourth lens L4. For example, the fourth lens L4 is substantially disposed between the aperture sto and the image sensor IS and may focus light incident through the aperture sto and cause the light to enter the image sensor IS.

According to an embodiment, the lens assembly 500 may further include an infrared cut filter F. According to an embodiment, the infrared cut filter F may include an object-side surface S10 facing the object O and an image-side surface S11 facing the image sensor IS. For example, in a lens assembly or the electronic device 101 for detecting infrared, the infrared cut filter F may be replaced with a pass filter transmitting infrared and blocking visible light. For example, the infrared cut filter F may be aligned with the plurality of lenses L1, L2, L3, L4 of the lens group, the aperture sto and/or the image sensor IS along the optical axis O-I.

In an embodiment, the lens assembly 500 may be manufactured with specifications exemplified in following [Table 8], and may have aspheric coefficients of [Table 9] and [Table 10]. In [Table 8], lens surface 1 may exemplify a gap between the first lens L1 and the object O, and a measured value of its thickness may be a distance of the gap or an air gap.

A total focal length (EFL) of the lens assembly 500 implemented with specifications of [Table 8] below is about 34.4 mm, an F-number (Fno) is about 5.959, an optical total length from image plane (OTTL) is about 30.504 mm, a maximum image height (Max IH) of the image sensor IS is about 2.9 mm, and a total field of view (FOV) may be about 9.58 degrees.

**[Table 8]**

| lens surface (Surface) | Radius of curvature (Radius) | Thickness | Glass material | H-APE | Overall focal length (EFL) | Refractive index (Nd) | Abbe number (Vd) |
|---|---|---|---|---|---|---|---|
| Object (O) | infinity | infinity | | | | | |
| 1 | infinity | 0.10000 | - | 3.15278 | | | |
| 2* | 8.71156 | 1.83894 | 406700.76 | 3.10000 | 12.693 | 1.40670 | 77.83 |
| 3* | -11.98705 | 4.00000 | - | 2.95274 | | | |
| 4* | -6.54512 | 0.50000 | EP9000'_ PRIV | 1.90000 | -4.417 | 1.67074 | 19.24 |
| 5* | 5.70558 | 0.49834 | - | 1.86673 | | | |
| 6* | 18.56050 | 0.71576 | EP10000' _PRI | 1.94077 | 5.818 | 1.68042 | 18.15 |
| 7* | -5.03327 | 0.10000 | - | 1.95607 | | | |
| 8*(sto) | -19.93966 | 0.50000 | EP4500'_ PRIV | 1.90000 | -24.858 | 1.61444 | 25.94 |
| 9* | 68.53163 | 21.23710 | - | 1.90000 | | | |
| 10 | infinity | 0.21000 | BSC7_ HOYA | 2.85322 | infinity | 1.51680 | 64.2 |
| 11 | infinity | 0.90084 | - | 2.85942 | | | |
| img | infinity | 0.00343 | - | 2.90000 | | | |

[Tables 9] and [Table 10] below list aspheric coefficients of the lenses L1, L2, L3, L4, and the aspheric coefficients may be calculated through [Equation 1] described above with reference to [Table 3] and [Table 4].

**[Table 9]**

| lens surface (Surface) | S2 | S3 | S4 | S5 |
|---|---|---|---|---|
| Radius | 8.71156E+00 | -1.19870E+01 | -6.54512E+00 | 5.70558E+00 |
| K'(Conic) | -5.86317E-01 | -1.00000E+00 | -1.62327E+00 | -1.49303E+00 |
| A(4th)/C4 | -6.03623E-04 | -2.08015E-04 | 6.73250E-04 | 6.64933E-04 |
| B(6th)/C5 | 8.38089E-04 | 1.11374E-03 | 2.78946E-04 | 7.58092E-04 |
| C(8th)/C6 | -1.05898E-03 | -1.55026E-03 | 2.09815E-05 | -1.29374E-04 |
| D(10th)/C7 | 8.04340E-04 | 1.30949E-03 | -1.42755E-05 | 4.83045E-06 |
| E(12th)/C8 | -4.11595E-04 | -7.46251E-04 | 2.07403E-06 | 5.00313E-06 |
| F(14th)/C9 | 1.48197E-04 | 3.00508E-04 | -5.00128E-07 | -8.61057E-08 |
| G(16th)/C10 | -3.82450E-05 | -8.72804E-05 | 5.71997E-08 | 4.03912E-09 |
| H(18th)/C11 | 7.11537E-06 | 1.84235E-05 | 2.59941E-08 | 1.42763E-08 |
| J(20th)/C12 | -9.49975E-07 | -2.81964E-06 | -4.45702E-09 | -3.56814E-09 |
| K(22th)/C13 | 8.95244E-08 | 3.08753E-07 | | |
| L(24th)/C14 | -5.75836E-09 | -2.35108E-08 | | |
| M(26th)/C15 | 2.37388E-10 | 1.17924E-09 | | |
| N(28th)/C16 | -5.53351E-12 | -3.49256E-11 | | |
| O(30th)/C17 | 5.32414E-14 | 4.61219E-13 | | |

**[Table 10]**

| lens surface (Surface) | S6 | S7 | S8 | S9 |
|---|---|---|---|---|
| Radius | 1.85605E+01 | -5.03327E+00 | -1.99397E+01 | 6.85316E+01 |
| K'(Conic) | 4.73053E+01 | -3.55769E-02 | -1.00000E+00 | -1.00000E+00 |
| A(4th)/C4 | -1.41795E-03 | -1.07912E-03 | -3.42540E-03 | -2.68068E-03 |
| B(6th)/C5 | 1.46296E-03 | 8.04078E-04 | -6.72816E-04 | -3.81255E-04 |
| C(8th)/C6 | -8.35316E-04 | -5.33800E-04 | 5.29551E-05 | -2.03973E-04 |
| D(10th)/C7 | 3.79921E-04 | 2.99907E-04 | 1.24974E-05 | 1.48641E-04 |
| E(12th)/C8 | -1.26371E-04 | -1.19136E-04 | 4.57232E-06 | -2.40618E-05 |
| F(14th)/C9 | 2.28016E-05 | 2.58454E-05 | -9.71711E-08 | -1.57035E-06 |
| G(16th)/C10 | -1.16673E-06 | -2.02984E-06 | -1.60426E-07 | 5.82858E-07 |
| H(18th)/C11 | -1.72782E-07 | -1.41663E-07 | 1.11058E-07 | 1.22799E-07 |
| J(20th)/C12 | 2.03518E-08 | 2.60397E-08 | -1.70975E-08 | -2.56658E-08 |
| K(22th)/C13 | | | | |
| L(24th)/C14 | | | | |
| M(26th)/C15 | | | | |
| N(28th)/C16 | | | | |
| O(30th)/C17 | | | | |

### [Embodiment 4]

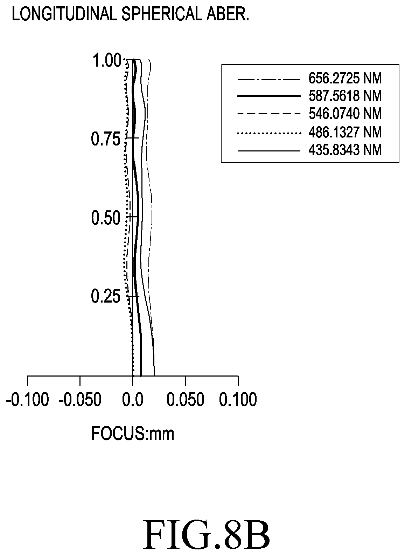

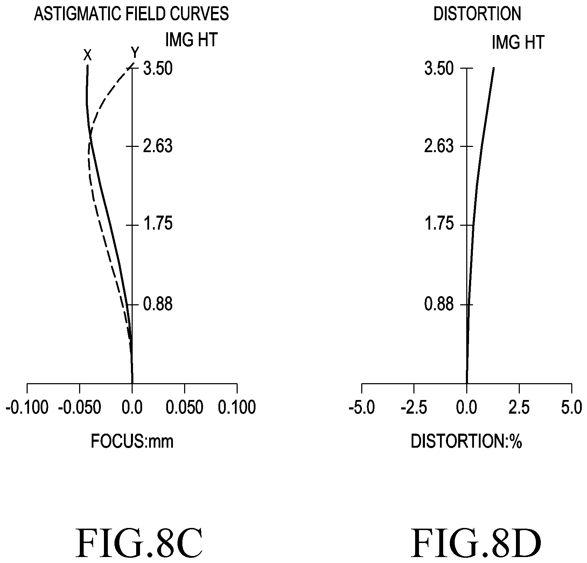

FIG. 8A is a configuration diagram illustrating an optical system including a lens assembly and an image sensor according to an embodiment of the disclosure. FIG. 8B is a graph illustrating spherical aberration of the lens assembly of FIG. 8A according to an embodiment of the disclosure. FIG. 8C is a graph illustrating astigmatism of the lens assembly of FIG. 8A according to an embodiment of the disclosure. FIG. 8D is a graph illustrating distortion of the lens assembly of FIG. 8A according to an embodiment of the disclosure.

FIG. 8B is a graph illustrating spherical aberration of the lens assembly 600 according to an embodiment of the disclosure, in which a horizontal axis represents a coefficient of longitudinal spherical aberration, a vertical axis represents a normalized distance from the optical axis O-I, and changes in longitudinal spherical aberration according to wavelength of light are illustrated. The longitudinal spherical aberration is illustrated for light having wavelengths of, e.g., 656.2725 (NM, nanometer), 587.5618 (NM), 546.0740 (NM), 486.1327 (NM) and 435.8343 (NM), respectively. FIG. 8C is a graph illustrating astigmatic field curves for light having a wavelength of 546.0740 (NM) of the lens assembly 600 according to an embodiment of the disclosure, in which 'X' exemplifies a sagittal plane, and 'Y' exemplifies a tangential plane or meridional plane. FIG. 8D is a graph illustrating distortion for light having a wavelength of 546.0740 (NM) of the lens assembly 600 according to an embodiment of the disclosure.

In an embodiment, a configuration of the lens assembly 600 may be at least partially identical or similar to a configuration of the lens assembly 300 described above with reference to FIG. 5A, and may satisfy [Formulas 1 to 5] described above.

Referring to FIG. 8A, the lens assembly 600 may include a lens group including a plurality (e.g., at least four or five) of lenses L1, L2, L3, L4, L5, at least one reflective member M, an aperture sto and/or an image sensor IS. According to an embodiment, the lenses L1, L2, L3, L4, L5 of the lens group, the aperture sto, the reflective member M and/or the image sensor IS may be substantially aligned on the optical axis O-I.

According to an embodiment, the lens group or lenses L1, L2, L3, L4, L5 of the lens assembly 600 may include a first lens L1, a second lens L2, a third lens L3, a fourth lens L4 and a fifth lens L5 sequentially disposed and/or aligned along the optical axis O-I in a direction from the object O toward the image sensor IS. According to an embodiment, the lenses L1, L2, L3, L4, L5 and/or the reflective member M may each include an 'object-side surface' as a surface facing the object O and an 'image-side surface' as a surface facing the image I (or the image sensor IS). According to an embodiment, the lenses L1, L2, L3, L4, L5 may be formed of glass and/or synthetic resin (e.g., plastic) material. According to an embodiment, at least some of the lenses L1, L2, L3, L4, L5 may have at least one of an object-side surface or an image-side surface formed as an aspheric surface.

According to an embodiment, in an embodiment, the first lens (or a first lens) L1, as a lens closest to the object O side (or a first lens from the object side), may have a positive refractive power. According to an embodiment, the object-side surface S2 of the first lens L1 may have a convex shape. For example, a shape of the object-side surface S2 convex toward the object O side may suppress an increase in spherical aberration due to larger aperture of the lenses L1, L2, L3, L4, L5. According to an embodiment, at least one of the object-side surface S2 and the image-side surface S3 of the first lens L1 may be formed as an aspherical surface.

According to an embodiment, some of the lenses L1, L2, L3, L4, L5 including the first lens L1 may be an extra-low dispersing lens (or a super extra-low dispersing lens). For example, such an extra-low (or super extra-low) dispersing lens may be formed of a glass material formed to have a lower dispersion than ordinary glass to reduce chromatic aberration. According to an embodiment, by providing some of the lenses L1, L2, L3, L4, L5 of the lens assembly 600 as an extra-low (or super extra-low) dispersing lens, chromatic aberration may be minimized and resolution may be enhanced.

According to an embodiment, the lenses L1, L2, L3, L4, L5 may include at least one lens having a negative refractive power. According to an embodiment, at least one of a second lens L2 as a second lens from the object O side, a third lens L3 as a third lens, a fourth lens L4 as a fourth lens and a fifth lens L5 as a fifth lens may have a negative refractive power. According to an embodiment, a lens closest to the object O side among at least one lens(es) having a negative refractive power of the lenses L1, L2, L3, L4, L5 may have at least one of an object O side surface or an image-side surface formed as an aspherical surface. According to an embodiment, a lens closest to the object O side among at least one lens(es) having a negative refractive power may have an image-side surface with a concave shape.

In an embodiment, at least one of the lenses L1, L2, L3, L4, L5 and/or the image sensor IS may be configured to reciprocate along the optical axis O-I. According to an embodiment, the electronic device (e.g., the electronic device 101 of FIG. 1 and/or the electronic device 101 of FIGS. 3 and 4) or a processor (e.g., the processor 120 of FIG. 1) may be configured to focus or adjust a focal length by reciprocating the lenses L1, L2, L3, L4, L5 and/or the image sensor IS along the optical axis O-I.

According to an embodiment, the reflective member M may be disposed between the fifth lens L5 and the image sensor IS. The reflective member M may be an optical member configured to refract and/or reflect light entering the image sensor IS after passing through the lens assembly 600. For example, a path of a chief ray of a bundle of light rays passing through the reflective member M may be parallel to a chief ray incident on the lens assembly 600. According to an embodiment, the reflective member M may include at least one mirror and/or at least one prism configured to refract and/or reflect light. For example, the reflective member M may be configured to change a path of light at least once. According to an embodiment, by including the reflective member M in the lens assembly 600, a folded optical system (or a folded camera) may be implemented.

According to an embodiment, the aperture sto may be disposed between the object O and the first lens L1, and may be implemented adjacent to one surface (e.g., the object-side surface S2) of the first lens L1 or on the object-side surface S2. For example, the disposition of the aperture sto located in front of the object-side surface S2 of the first lens L1 may be advantageous for reducing a field stop diameter of the optical system and minimizing an aperture. For example, the lenses L1, L2, L3, L4, L5 are substantially disposed between the aperture sto and the image sensor IS and may focus light incident through the aperture sto and cause the light to enter the image sensor IS.

According to an embodiment, the lens assembly 600 may further include an infrared cut filter F. According to an embodiment, the infrared cut filter F may include an object-side surface S14 facing the object O and an image-side surface S15 facing the image sensor IS. For example, in a lens assembly or the electronic device 101 for detecting infrared, the infrared cut filter F may be replaced with a pass filter transmitting infrared and blocking visible light. For example, the infrared cut filter F may be aligned with the plurality of lenses L1, L2, L3, L4, L5 of the lens group, the aperture sto and/or the image sensor IS along the optical axis O-I.

In an embodiment, the lens assembly 600 may be manufactured with specifications exemplified in [Table 11], and may have aspheric coefficients of [Table 12] and [Table 13]. In [Table 11], lens surface 1 may exemplify a gap between the first lens L1 and the object O, and a measured value of its thickness may be a distance of the gap or an air gap.

A total focal length (EFL) of the lens assembly 600 implemented with specifications of [Table 11] below is about 18 mm, an F-number (Fno) is about 3, an optical total length from image plane (OTTL) is about 23.574 mm, a maximum image height (Max IH) of the image sensor IS is about 3.5 mm, and a total field of view (FOV) may be about 21.74 degrees.

**[Table 11]**

| lens surface (Surface) | Radius of curvature (Radius) | Thickness | Glass material | H-APE | Overall focal length (EFL) | Refractive index (Nd) | Abbe number (Vd) |
|---|---|---|---|---|---|---|---|
| Object (O) | infinity | infinity | | | | | |
| sto | infinity | -0.50000 | - | 3.00000 | | | |
| 2* | 6.00996 | 1.70000 | 406700.76 | 3.00076 | 34.275 | 1.40670 | 76 |
| 3* | 9.67596 | 0.30000 | - | 2.77712 | | | |
| 4* | 9.78952 | 0.77000 | 406700.76 | 2.73869 | 53.261 | 1.40670 | 76 |
| 5* | 17.41000 | 0.40807 | - | 3.00000 | | | |
| 6* | 7.74386 | 0.80700 | K26R25'_ PRIV | 2.51997 | 12.082 | 1.53500 | 55.75 |
| 7* | -38.67871 | 0.10000 | - | 2.39436 | | | |
| 8* | 2.84723 | 0.50000 | EP45025' _PRI | 2.26009 | -14.407 | 1.61444 | 25.94 |
| 9* | 2.01392 | 1.11441 | - | 2.07827 | | | |
| 10* | -4.70688 | 0.43000 | EP45025' _PRI | 2.09183 | -38.681 | 1.61444 | 25.94 |
| 11* | -6.06101 | 0.56895 | - | 2.08845 | | | |
| 12 | infinity | 15.00000 | LAC8_H OYA | 2.16675 | infinity | 1.71300 | 53.94 |
| 13 | infinity | 1.10000 | - | 3.27041 | | | |
| 14 | infinity | 0.21000 | BSC7_ HOYA | 3.41004 | infinity | 1.51680 | 64.2 |
| 15 | infinity | 0.00000 | - | 3.42752 | | | |
| img | infinity | -0.00261 | - | 3.50189 | | | |

[Tables 12] and [Table 13] below list aspheric coefficients of the lenses L1, L2, L3, L4, L5, and the aspheric coefficients may be calculated through [Equation 1] described above with reference to [Table 3] and [Table 4].

**[Table 12]**

| lens surface (Surface) | S2 | S3 | S4 | S5 | S6 |
|---|---|---|---|---|---|
| Radius | 6.00996E+00 | 9.67596E+00 | 9.78952E+00 | 1.74100E+01 | 7.74386E+00 |
| K'(Conic) | 2.04519E-01 | -1.00000E+00 | -1.00000E+00 | -1.00000E+00 | -1.18383E-01 |
| A(4th)/C4 | 3.76756E-04 | 8.50982E-05 | -7.33748E-05 | 8.22033E-04 | -4.82356E-05 |
| B(6th)/C5 | 3.05705E-06 | -1.18329E-05 | 1.14950E-05 | -1.07713E-04 | 1.78746E-03 |
| C(8th)/C6 | -2.02013E-07 | -1.75473E-07 | -8.70190E-08 | -4.06275E-06 | -8.64370E-04 |
| D(10th)/C7 | -7.54216E-08 | -8.77687E-08 | 3.94833E-08 | 1.01371E-06 | 2.85977E-04 |
| E(12th)/C8 | 6.16686E-09 | 0.00000E+00 | 0.00000E+00 | 1.68435E-08 | -5.15745E-05 |
| F(14th)/C9 | 1.99773E-09 | 0.00000E+00 | 0.00000E+00 | 6.22722E-09 | 4.75078E-06 |
| G(16th)/C10 | 9.27498E-12 | 0.00000E+00 | 0.00000E+00 | 1.04406E-09 | -1.78115E-07 |
| H(18th)/C11 | -1.31446E-11 | 0.00000E+00 | 0.00000E+00 | 5.01552E-11 | -2.46575E-10 |
| J(20th)/C12 | 2.28938E-13 | 0.00000E+00 | 0.00000E+00 | -2.75565E-11 | -3.45440E-11 |

**[Table 13]**

| lens surface (Surface) | S7 | S8 | S9 | S10 | S11 |
|---|---|---|---|---|---|
| Radius | -3.86787E+01 | 2.84723E+00 | 2.01392E+00 | -4.70688E+00 | -6.06101E+00 |
| K'(Conic) | -1.00000E+00 | -3.08830E-01 | -1.05013E+00 | -1.52378E+00 | 3.33405E+00 |
| A(4th)/C4 | 6.25112E-03 | -1.02555E-02 | -1.15983E-02 | 1.81252E-02 | 1.79347E-02 |
| B(6th)/C5 | 1.77903E-03 | 4.16515E-04 | 1.91203E-03 | 2.85147E-04 | 3.22965E-04 |
| C(8th)/C6 | -1.21931E-03 | -2.55607E-04 | -5.60735E-04 | 1.74452E-04 | 9.64636E-05 |
| D(10th)/C7 | 4.73870E-04 | 6.92801E-06 | 6.67423E-05 | 1.16973E-06 | 4.35892E-05 |
| E(12th)/C8 | -9.56301E-05 | 1.18783E-06 | -1.06891E-06 | -1.72941E-05 | -3.20429E-05 |
| F(14th)/C9 | 9.95092E-06 | 1.62502E-07 | -9.78148E-07 | 3.01208E-06 | 6.23700E-06 |
| G(16th)/C10 | -4.60836E-07 | -2.36107E-08 | 4.43873E-08 | -3.07926E-07 | -4.79141E-07 |
| H(18th)/C11 | 4.13949E-10 | 4.30886E-10 | -1.10287E-08 | -4.38713E-09 | -1.25445E-08 |
| J(20th)/C12 | 3.44066E-10 | 8.48805E-11 | 8.54150E-10 | 3.87091E-10 | 3.12774E-09 |

### [Embodiment 5]

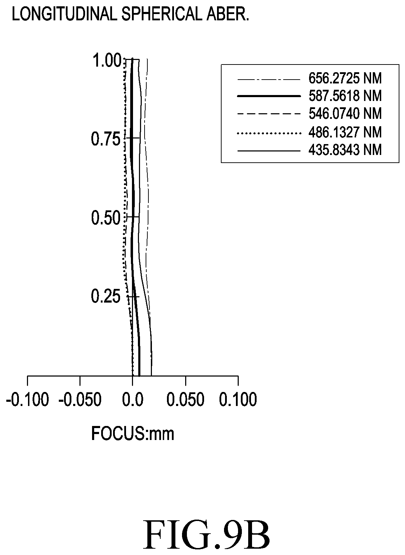

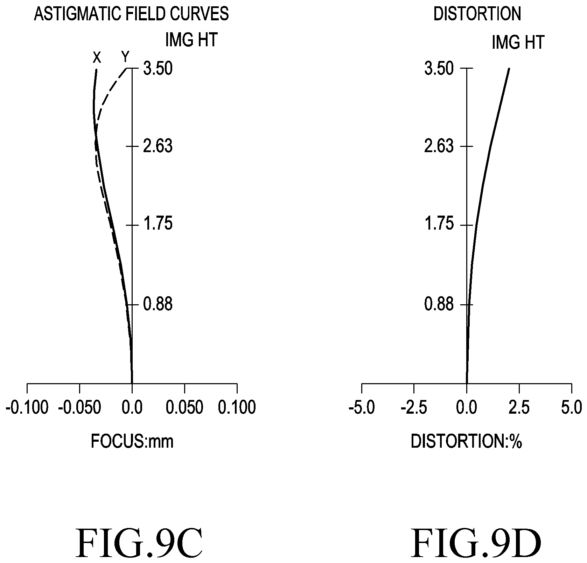

FIG. 9A is a configuration diagram illustrating an optical system including a lens assembly and an image sensor according to an embodiment of the disclosure. FIG. 9B is a graph illustrating spherical aberration of the lens assembly of FIG. 9A according to an embodiment of the disclosure. FIG. 9C is a graph illustrating astigmatism of the lens assembly of FIG. 9A according to an embodiment of the disclosure. FIG. 9D is a graph illustrating distortion of the lens assembly of FIG. 9A according to an embodiment of the disclosure.

FIG. 9B is a graph illustrating spherical aberration of the lens assembly 700 according to an embodiment of the disclosure, in which a horizontal axis represents a coefficient of longitudinal spherical aberration, a vertical axis represents a normalized distance from the optical axis O-I, and changes in longitudinal spherical aberration according to wavelength of light are illustrated. The longitudinal spherical aberration is illustrated for light having wavelengths of, e.g., 656.2725 (NM, nanometer), 587.5618 (NM), 546.0740 (NM), 486.1327 (NM) and 435.8343 (NM), respectively. FIG. 9C is a graph illustrating astigmatic field curves for light having a wavelength of 546.0740 (NM) of the lens assembly 700 according to an embodiment of the disclosure, in which 'X' exemplifies a sagittal plane, and 'Y' exemplifies a tangential plane or meridional plane. FIG. 9D is a graph illustrating distortion for light having a wavelength of 546.0740 (NM) of the lens assembly 700 according to an embodiment of the disclosure.

In an embodiment, a configuration of the lens assembly 700 may be at least partially identical or similar to a configuration of the lens assembly 300 described above with reference to FIG. 5A, and may satisfy [Formulas 1 to 5] described above.

Referring to FIG. 9A, the lens assembly 700 may include a lens group including a plurality (e.g., at least four) of lenses L1, L2, L3, L4, at least one reflective member M, an aperture sto and/or an image sensor IS. According to an embodiment, the lenses L1, L2, L3, L4 of the lens group, the aperture sto, the reflective member M and/or the image sensor IS may be substantially aligned on the optical axis O-I.

According to an embodiment, the lens group or lenses L1, L2, L3, L4 of the lens assembly 700 may include a first lens L1, a second lens L2, a third lens L3 and a fourth lens L4 sequentially disposed and/or aligned along the optical axis O-I in a direction from the object O toward the image sensor IS. According to an embodiment, the lenses L1, L2, L3, L4 and/or the reflective member M may each include an 'object-side surface' as a surface facing the object O and an 'image-side surface' as a surface facing the image I (or the image sensor IS). According to an embodiment, the lenses L1, L2, L3, L4 may be formed of glass and/or synthetic resin (e.g., plastic) material. According to an embodiment, at least some of the lenses L1, L2, L3, L4 may have at least one of an object-side surface or an image-side surface formed as an aspheric surface.

According to an embodiment, in an embodiment, the first lens (or a first lens) L1, as a lens closest to the object O side (or a first lens from the object side), may have a positive refractive power. According to an embodiment, the object-side surface S2 of the first lens L1 may have a convex shape. For example, a shape of the object-side surface S2 convex toward the object O side may suppress an increase in spherical aberration due to larger aperture of the lenses L1, L2, L3, L4. According to an embodiment, at least one of the object-side surface S2 and the image-side surface S3 of the first lens L1 may be formed as an aspherical surface.

According to an embodiment, some of the lenses L1, L2, L3, L4 including the first lens L1 may be an extra-low dispersing lens (or a super extra-low dispersing lens). For example, such an extra-low (or super extra-low) dispersing lens may be formed of a glass material formed to have a lower dispersion than ordinary glass to reduce chromatic aberration. According to an embodiment, by providing some of the lenses L1, L2, L3, L4 of the lens assembly 700 as an extra-low (or super extra-low) dispersing lens, chromatic aberration may be minimized and resolution may be enhanced.

According to an embodiment, the lenses L1, L2, L3, L4 may include at least one lens having a negative refractive power. According to an embodiment, at least one of a second lens L2 as a second lens from the object O side, a third lens L3 as a third lens and a fourth lens L4 as a fourth lens may have a negative refractive power. According to an embodiment, a lens closest to the object O side among at least one lens(es) having a negative refractive power of the lenses L1, L2, L3, L4 may have at least one of an object O side surface or an image-side surface formed as an aspherical surface. According to an embodiment, a lens closest to the object O side among at least one lens(es) having a negative refractive power may have an image-side surface with a concave shape.

In an embodiment, at least one of the lenses L1, L2, L3, L4 and/or the image sensor IS may be configured to reciprocate along the optical axis O-I. According to an embodiment, the electronic device (e.g., the electronic device 101 of FIG. 1 and/or the electronic device 101 of FIGS. 3 and 4) or a processor (e.g., the processor 120 of FIG. 1) may be configured to focus or adjust a focal length by reciprocating the lenses L1, L2, L3, L4 and/or the image sensor IS along the optical axis O-I.

According to an embodiment, the reflective member M may be disposed between the fourth lens L4 and the image sensor IS. The reflective member M may be an optical member configured to refract and/or reflect light entering the image sensor IS after passing through the lens assembly 700. For example, a path of a chief ray of a bundle of light rays passing through the reflective member M may be parallel to a chief ray incident on the lens assembly 700. According to an embodiment, the reflective member M may include at least one mirror and/or at least one prism configured to refract and/or reflect light. For example, the reflective member M may be configured to change a path of light at least once. According to an embodiment, by including the reflective member M in the lens assembly 700, a folded optical system (or a folded camera) may be implemented.

According to an embodiment, the aperture sto may be disposed between the object O and the first lens L1, and may be implemented adjacent to one surface (e.g., the object-side surface S2) of the first lens L1 or on the object-side surface S2. For example, the disposition of the aperture sto located in front of the object-side surface S2 of the first lens L1 may be advantageous for reducing a field stop diameter of the optical system and minimizing an aperture. For example, the lenses L1, L2, L3, L4 are substantially disposed between the aperture sto and the image sensor IS and may focus light incident through the aperture sto and cause the light to enter the image sensor IS.

According to an embodiment, the lens assembly 700 may further include an infrared cut filter F. According to an embodiment, the infrared cut filter F may include an object-side surface S12 facing the object O and an image-side surface S13 facing the image sensor IS. For example, in a lens assembly or the electronic device 101 for detecting infrared, the infrared cut filter F may be replaced with a pass filter transmitting infrared and blocking visible light. For example, the infrared cut filter F may be aligned with the plurality of lenses L1, L2, L3, L4 of the lens group, the aperture sto and/or the image sensor IS along the optical axis O-I.

In an embodiment, the lens assembly 800 may be manufactured with specifications exemplified in following [Table 14], and may have aspheric coefficients of [Table 15] and [Table 16]. In [Table 14], lens surface 1 may exemplify a gap between the first lens L1 and the object O, and a measured value of its thickness may be a distance of the gap or an air gap.

A total focal length (EFL) of the lens assembly 700 implemented with specifications of [Table 14] below is about 17 mm, an F-number (Fno) is about 2.833, an optical total length from image plane (OTTL) is about 22.514 mm, a maximum image height (Max IH) of the image sensor IS is about 3.5 mm, and a total field of view (FOV) may be about 22.83 degrees.

**[Table 14]**

| lens surface (Surface) | Radius of curvature (Radius) | Thickness | Glass material | H-APE | Overall focal length (EFL) | Refractiv e index (Nd) | Abbe number (Vd) |
|---|---|---|---|---|---|---|---|
| Object (O) | infinity | infinity | | | | | |
| sto | infinity | -0.50000 | - | 3.00000 | | | |
| 2* | 6.93719 | 2.00000 | 406700.7 6 | 3.00037 | 14.857 | 1.40670 | 76 |
| 3* | -43.99529 | 1.00000 | - | 3.00000 | | | |
| 4* | 7.58877 | 0.63719 | K26R25'_ PRIV | 2.47517 | 16.952 | 1.53500 | 55.75 |
| 5* | 44.14674 | 0.15474 | - | 2.35075 | | | |
| 6* | 2.93727 | 0.52788 | EP45025' _PRI | 2.23680 | -14.296 | 1.61444 | 25.94 |
| 7* | 2.05443 | 1.23554 | - | 2.06741 | | | |
| 8* | -4.80671 | 0.52728 | EP45025' _PRI | 2.09183 | -43.715 | 1.61444 | 25.94 |
| 9* | -6.08823 | 0.10000 | - | 2.06335 | | | |
| 10 | infinity | 15.00000 | LAC8_H OYA | 2.08036 | infinity | 1.71300 | 53.94 |
| 11 | infinity | 0.60000 | - | 3.32058 | | | |
| 12 | infinity | 0.21000 | BSC7 H OYA | 3.40629 | infinity | 1.51680 | 64.2 |
| 13 | infinity | 0.00000 | - | 3.42593 | | | |
| img | infinity | -0.00257 | - | 3.50442 | | | |

[Tables 15] and [Table 16] below list aspheric coefficients of the lenses L1, L2, L3, L4, L5, and the aspheric coefficients may be calculated through [Equation 1] described above with reference to [Table 3] and [Table 4].

**[Table 15]**

| lens surface (Surface) | S2 | S3 | S4 | S5 |
|---|---|---|---|---|
| Radius | 6.93719E+00 | -4.39953E+01 | 7.58877E+00 | 4.41467E+01 |
| K'(Conic) | 2.67469E-01 | -1.00000E+00 | 1.63216E-01 | 4.48037E+01 |
| A(4th)/C4 | 5.01768E-04 | 8.85724E-04 | 1.15889E-04 | 6.31994E-03 |
| B(6th)/C5 | -6.17524E-07 | -6.89108E-05 | 1.77196E-03 | 1.78767E-03 |
| C(8th)/C6 | -1.97597E-07 | -3.03393E-06 | -8.65537E-04 | -1.22487E-03 |
| D(10th)/C7 | -8.42084E-08 | 6.90474E-07 | 2.86015E-04 | 4.72569E-04 |
| E(12th)/C8 | 3.43529E-09 | -2.77259E-08 | -5.16473E-05 | -9.56874E-05 |
| F(14th)/C9 | 1.35801E-09 | -1.90167E-09 | 4.72917E-06 | 9.97287E-06 |
| G(16th)/C10 | -2.12681E-11 | 1.45106E-10 | -1.81114E-07 | -4.57373E-07 |
| H(18th)/C11 | -1.10587E-11 | 2.98386E-11 | -2.66802E-10 | 1.13926E-10 |
| J(20th)/C12 | 6.22628E-13 | -2.21195E-12 | 5.41005E-11 | 1.87429E-10 |

**[Table 16]**

| lens surface (Surface) | S6 | S7 | S8 | S9 |
|---|---|---|---|---|
| Radius | 2.93727E+00 | 2.05443E+00 | -4.80671E+00 | -6.08824E+00 |
| K'(Conic) | -2.71417E-01 | -1.07098E+00 | -1.42797E+00 | 3.09669E+00 |
| A(4th)/C4 | -9.73186E-03 | -1.19068E-02 | 1.79896E-02 | 1.78685E-02 |
| B(6th)/C5 | 4.59626E-04 | 1.79939E-03 | 2.30461E-04 | 4.56353E-04 |
| C(8th)/C6 | -2.55355E-04 | -5.75440E-04 | 1.77465E-04 | 9.62673E-05 |
| D(10th)/C7 | 6.87917E-06 | 6.45070E-05 | 2.45932E-06 | 4.91238E-05 |
| E(12th)/C8 | 1.17715E-06 | -1.44705E-06 | -1.73009E-05 | -3.09252E-05 |
| F(14th)/C9 | 1.41107E-07 | -9.51820E-07 | 3.08327E-06 | 6.51699E-06 |
| G(16th)/C10 | -2.58357E-08 | 6.04297E-08 | -2.65925E-07 | -5.21043E-07 |
| H(18th)/C11 | 1.91516E-10 | -2.24614E-09 | 8.39052E-09 | -1.03795E-08 |
| J(20th)/C12 | -4.19012E-10 | 7.75116E-10 | 4.04739E-10 | 3.14244E-09 |

### [Embodiment 6]

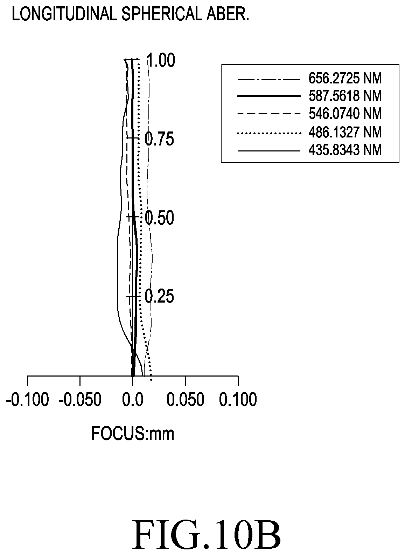

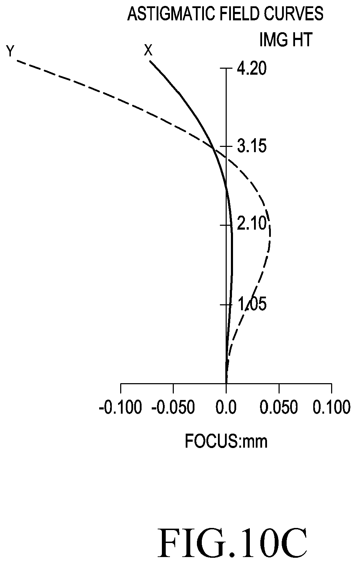

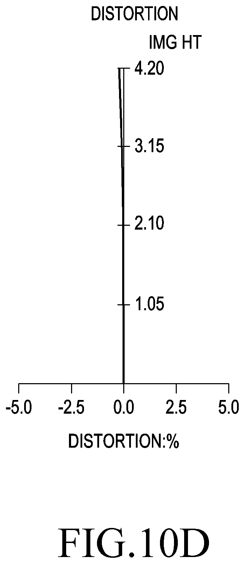

FIG. 10A is a configuration diagram illustrating an optical system including a lens assembly and an image sensor according to an embodiment of the disclosure. FIG. 10B is a graph illustrating spherical aberration of the lens assembly of FIG. 10A according to an embodiment of the disclosure. FIG. 10C is a graph illustrating astigmatism of the lens assembly of FIG. 10A according to an embodiment of the disclosure. FIG. 10D is a graph illustrating distortion of the lens assembly of FIG. 10A according to an embodiment of the disclosure.

FIG. 10B is a graph illustrating spherical aberration of the lens assembly 800 according to an embodiment of the disclosure, in which a horizontal axis represents a coefficient of longitudinal spherical aberration, a vertical axis represents a normalized distance from the optical axis O-I, and changes in longitudinal spherical aberration according to wavelength of light are illustrated. The longitudinal spherical aberration is illustrated for light having wavelengths of, e.g., 656.2725 (NM, nanometer), 587.5618 (NM), 546.0740 (NM), 486.1327 (NM) and 435.8343 (NM), respectively. FIG. 10C is a graph illustrating astigmatic field curves for light having a wavelength of 546.0740 (NM) of the lens assembly 800 according to an embodiment of the disclosure, in which 'X' exemplifies a sagittal plane, and 'Y' exemplifies a tangential plane or meridional plane. FIG. 10D is a graph illustrating distortion for light having a wavelength of 546.0740 (NM) of the lens assembly 800 according to an embodiment of the disclosure.

In an embodiment, a configuration of the lens assembly 800 may be at least partially identical or similar to a configuration of the lens assembly 300 described above with reference to FIG. 5A, and may satisfy [Formulas 1 to 5] described above.

Referring to FIG. 10A, the lens assembly 800 may include a lens group including a plurality (e.g., at least four or five) of lenses L1, L2, L3, L4, L5, at least one reflective member M, an aperture sto and/or an image sensor IS. According to an embodiment, the lenses L1, L2, L3, L4, L5 of the lens group, the aperture sto, the reflective member M and/or the image sensor IS may be substantially aligned on the optical axis O-I.

According to an embodiment, the lens group or lenses L1, L2, L3, L4, L5 of the lens assembly 800 may include a first lens L1, a second lens L2, a third lens L3, a fourth lens L4 and a fifth lens L5 sequentially disposed and/or aligned along the optical axis O-I in a direction from the object O toward the image sensor IS. According to an embodiment, the lenses L1, L2, L3, L4, L5 and/or the reflective member M may each include an 'object-side surface' as a surface facing the object O and an 'image-side surface' as a surface facing the image I (or the image sensor IS). According to an embodiment, the lenses L1, L2, L3, L4, L5 may be formed of glass and/or synthetic resin (e.g., plastic) material. According to an embodiment, at least some of the lenses L1, L2, L3, L4, L5 may have at least one of an object-side surface or an image-side surface formed as an aspheric surface.

According to an embodiment, in an embodiment, the first lens (or a first lens) L1, as a lens closest to the object O side (or a first lens from the object side), may have a positive refractive power. According to an embodiment, the object-side surface S2 of the first lens L1 may have a convex shape. For example, a shape of the object-side surface S2 convex toward the object O side may suppress an increase in spherical aberration due to larger aperture of the lenses L1, L2, L3, L4, L5. According to an embodiment, at least one of the object-side surface S2 and the image-side surface S3 of the first lens L1 may be formed as an aspherical surface.

According to an embodiment, some of the lenses L1, L2, L3, L4, L5 including the first lens L1 may be an extra-low dispersing lens (or a super extra-low dispersing lens). For example, such an extra-low (or super extra-low) dispersing lens may be formed of a glass material formed to have a lower dispersion than ordinary glass to reduce chromatic aberration. According to an embodiment, by providing some of the lenses L1, L2, L3, L4, L5 of the lens assembly 800 as an extra-low (or super extra-low) dispersing lens, chromatic aberration may be minimized and resolution may be enhanced.

According to an embodiment, the lenses L1, L2, L3, L4, L5 may include at least one lens having a negative refractive power. According to an embodiment, at least one of a second lens L2 as a second lens from the object O side, a third lens L3 as a third lens, a fourth lens L4 as a fourth lens and a fifth lens L5 as a fifth lens may have a negative refractive power. According to an embodiment, a lens closest to the object O side among at least one lens(es) having a negative refractive power of the lenses L1, L2, L3, L4, L5 may have at least one of an object O side surface or an image-side surface formed as an aspherical surface. According to an embodiment, a lens closest to the object O side among at least one lens(es) having a negative refractive power may have an image-side surface with a concave shape.

In an embodiment, at least one of the lenses L1, L2, L3, L4, L5 and/or the image sensor IS may be configured to reciprocate along the optical axis O-I. According to an embodiment, the electronic device (e.g., the electronic device 101 of FIG. 1 and/or the electronic device 101 of FIGS. 3 and 4) or a processor (e.g., the processor 120 of FIG. 1) may be configured to focus or adjust a focal length by reciprocating the lenses L1, L2, L3, L4, L5 and/or the image sensor IS along the optical axis O-I.

According to an embodiment, the reflective member M may be disposed between the fifth lens L5 and the image sensor IS. The reflective member M may be an optical member configured to refract and/or reflect light entering the image sensor IS after passing through the lens assembly 800. For example, a path of a chief ray of a bundle of light rays passing through the reflective member M may be parallel to a chief ray incident on the lens assembly 800. According to an embodiment, the reflective member M may include at least one mirror and/or at least one prism configured to refract and/or reflect light. For example, the reflective member M may be configured to change a path of light at least once. According to an embodiment, by including the reflective member M in the lens assembly 800, a folded optical system (or a folded camera) may be implemented.

According to an embodiment, the aperture sto may be disposed between the second lens L2 and the third lens L3, and may be disposed or implemented adjacent to one surface (e.g., the object-side surface S6) of the third lens L3. For example, the lenses L3, L4, L5 are substantially disposed between the aperture sto and the image sensor IS and may focus light incident through the aperture sto and cause the light to enter the image sensor IS.

According to an embodiment, the lens assembly 800 may further include an infrared cut filter F. According to an embodiment, the infrared cut filter F may include an object-side surface S14 facing the object O and an image-side surface S15 facing the image sensor IS. For example, in a lens assembly or the electronic device 101 for detecting infrared, the infrared cut filter F may be replaced with a pass filter transmitting infrared and blocking visible light. For example, the infrared cut filter F may be aligned with the plurality of lenses L1, L2, L3, L4, L5 of the lens group, the aperture sto and/or the image sensor IS along the optical axis O-I.

In an embodiment, the lens assembly 800 may be manufactured with specifications exemplified in following [Table 17], and may have aspheric coefficients of [Table 18] and [Table 19]. In [Table 17], lens surface 1 may exemplify a gap between the first lens L1 and the object O, and a measured value of its thickness may be a distance of the gap or an air gap.

A total focal length (EFL) of the lens assembly 800 implemented with specifications of [Table 17] below is about 32.9 mm, an F-number (Fno) is about 3.749, an optical total length from image plane (OTTL) is about 40.731 mm, a maximum image height (Max IH) of the image sensor IS is about 4.2 mm, and a total field of view (FOV) may be about 14.56 degrees.

**[Table 17]**

| lens surface (Surface) | Radius of curvature (Radius) | Thickness | Glass material | H-APE | Overall focal length (EFL) | Refractiv e index (Nd) | Abbe number (Vd) |
|---|---|---|---|---|---|---|---|
| Object (O) | infinity | infinity | | | | | |
| 1 | infinity | 0.00000 | - | 4.68966 | | | |
| 2* | 7.02807 | 3.03516 | 406700.7 6 | 4.50000 | 11.633 | 1.40670 | 76 |
| 3* | -12.78582 | 0.43834 | - | 4.30000 | | | |
| 4* | infinity | 1.50000 | EP3500'_ PRIV | 3.86689 | -8.121 | 1.56717 | 37.4 |
| 5* | 4.63074 | 0.44328 | - | 3.23421 | | | |
| 6*(sto) | 6.23719 | 1.22284 | EP10000' _PRI | 3.24706 | 12.616 | 1.68042 | 18.15 |
| 7* | 20.30479 | 0.23346 | - | 3.14920 | | | |
| 8* | 18.41120 | 0.46583 | EP5000'_ PRIV | 3.11519 | -8.491 | 1.63490 | 23.96 |
| 9* | 4.15991 | 1.00000 | - | 2.93301 | | | |
| 10* | 8.70360 | 2.00000 | APL5514 M'_PR | 3.20000 | 12.451 | 1.54444 | 55.92 |
| 11* | -28.71830 | 0.70588 | - | 3.20000 | | | |
| 12 | infinity | 24.00000 | BSC7 H OYA | 3.24130 | infinity | 1.51680 | 64.2 |
| 13 | infinity | 4.70588 | - | 3.94578 | | | |
| 14 | infinity | 0.20000 | BK7_SC HOTT | 4.15569 | infinity | 1.51680 | 64.17 |
| 15 | infinity | 0.77850 | - | 4.16156 | | | |
| img | infinity | 0.00174 | - | 4.20125 | | | |

[Tables 18] and [Table 19] below list aspheric coefficients of the lenses L1, L2, L3, L4, L5, and the aspheric coefficients may be calculated through [Equation 1] described above with reference to [Table 3].

**[Table 18]**

| lens surface (Surface) | S2 | S3 | S4 | S5 | S6 |
|---|---|---|---|---|---|
| Radius | 7.02807E+00 | -1.27858E+01 | 5.58432E+03 | 4.63074E+00 | 6.23720E+00 |
| K'(Conic) | -7.91606E-01 | -1.00000E+00 | -1.00000E+00 | -6.13562E-02 | 1.88252E-02 |
| A(4th)/C4 | -2.24824E-04 | -1.06357E-03 | 2.25035E-05 | 3.28789E-03 | 2.12700E-04 |
| B(6th)/C5 | 2.27772E-05 | 1.28503E-03 | 2.41335E-05 | -3.64380E-03 | 2.00974E-04 |
| C(8th)/C6 | 2.82184E-05 | -4.52181E-04 | -1.07433E-05 | 1.95735E-03 | -1.32470E-04 |
| D(10th)/C7 | -1.35724E-05 | 9.06346E-05 | 2.19131E-06 | -6.12022E-04 | 2.96121E-05 |
| E(12th)/C8 | 3.04462E-06 | -1.04503E-05 | -2.03751E-07 | 1.18627E-04 | -1.91089E-06 |
| F(14th)/C9 | -4.16044E-07 | 5.02706E-07 | 7.93731E-09 | -1.44727E-05 | -6.51695E-07 |
| G(16th)/C10 | 3.73207E-08 | 3.83840E-08 | 5.34877E-11 | 1.07852E-06 | 2.54474E-07 |
| H(18th)/C11 | -2.24607E-09 | -8.84436E-09 | -2.11877E-11 | -4.48012E-08 | -5.26631E-08 |
| J(20th)/C12 | 8.99565E-11 | 7.62424E-10 | 1.44610E-12 | 7.96051E-10 | 7.42539E-09 |
| K(22th)/C13 | -2.30218E-12 | -3.86136E-11 | -6.10348E-14 | 0.00000E+00 | -7.14973E-10 |
| L(24th)/C14 | 3.40826E-14 | 1.20665E-12 | 1.39663E-15 | 0.00000E+00 | 4.47989E-11 |
| M(26th)/C15 | -2.21927E-16 | -2.19625E-14 | -1.22223E-17 | 0.00000E+00 | -1.64540E-12 |
| N(28th)/C16 | 0.00000E+00 | 1.89953E-16 | 0.00000E+00 | 0.00000E+00 | 2.68391E-14 |
| O(30th)/C17 | 0.00000E+00 | -3.01198E-19 | 0.00000E+00 | 0.00000E+00 | 0.00000E+00 |

**[Table 19]**

| lens surface (Surface) | S7 | S8 | S9 | S10 | S11 |
|---|---|---|---|---|---|
| Radius | 2.03048E+01 | 1.84112E+01 | 4.15991E+00 | 8.70360E+00 | -2.87183E+01 |
| K'(Conic) | 2.04864E+01 | 7.07956E+00 | -1.64455E-01 | 4.87354E+00 | 1.87281E+01 |
| A(4th)/C4 | -5.70277E-03 | -2.56413E-03 | 3.20421E-03 | 2.34457E-03 | 8.94365E-04 |
| B(6th)/C5 | 9.45750E-03 | 6.20204E-03 | -3.11223E-03 | -1.45762E-03 | -1.03517E-03 |
| C(8th)/C6 | -9.08278E-03 | -8.02403E-03 | 1.44370E-03 | 1.19676E-03 | 1.09225E-03 |
| D(10th)/C7 | 5.63256E-03 | 6.77221E-03 | 1.02455E-03 | -5.64172E-04 | -7.03894E-04 |
| E(12th)/C8 | -2.39759E-03 | -3.78944E-03 | -1.81198E-03 | 6.81120E-05 | 2.78303E-04 |
| F(14th)/C9 | 7.18077E-04 | 1.43131E-03 | 1.10245E-03 | 4.42086E-05 | -7.23938E-05 |
| G(16th)/C10 | -1.52649E-04 | -3.74382E-04 | -3.89473E-04 | -2.45224E-05 | 1.28294E-05 |
| H(18th)/C11 | 2.30497E-05 | 6.92277E-05 | 9.04670E-05 | 6.27124E-06 | -1.56276E-06 |
| J(20th)/C12 | -2.45171E-06 | -9.14061E-06 | -1.44784E-05 | -1.00079E-06 | 1.29000E-07 |
| K(22th)/C13 | 1.79639E-07 | 8.58935E-07 | 1.61627E-06 | 1.06655E-07 | -6.90208E-09 |
| L(24th)/C14 | -8.65505E-09 | -5.62651E-08 | -1.24166E-07 | -7.63606E-09 | 2.16130E-10 |
| M(26th)/C15 | 2.49190E-10 | 2.44856E-09 | 6.27684E-09 | 3.54225E-10 | -3.00822E-12 |
| N(28th)/C16 | -3.39669E-12 | -6.37832E-11 | -1.88409E-10 | -9.64761E-12 | 0.00000E+00 |
| O(30th)/C17 | 6.77702E-15 | 7.54378E-13 | 2.54848E-12 | 1.17347E-13 | 0.00000E+00 |

A lens assembly (or an optical system) including a plurality of lenses may be applied to a camera module of various electronic devices (e.g., a smartphone, a tablet PC, a smartwatch, a drone). In general, aberration due to a shape of a lens occurs in an optical system, and it is necessary to minimize such aberration to provide good optical performance. The lens assembly 300, 400, 500; 600; 700; 800 according to an embodiment of the disclosure may change a path of light reaching the image sensor IS according to design by including the reflective member M reflecting and/or refracting incident light. For example, by including such a reflective member M, a disposition direction of the imaging plane img of the image sensor IS may be variously designed with respect to an arrangement of the lenses L1, L2, L3, L4, L5. Accordingly, an optical system (or an imaging device or a camera module) having high optical performance (e.g., telephoto performance) may be implemented in a downsized and lightweight electronic device (e.g., the electronic device 101 of FIGS. 1, 3 and 4) such as a smartphone. The lens assembly according to an embodiment of the disclosure may suppress or minimize chromatic aberration caused by the reflective member M through a combination of refractive power, shape and material of the lenses, thereby providing high-resolution images while providing good telephoto performance.

Technical problems to be achieved from the disclosure of this document are not limited to technical problems mentioned above, and other technical problems not mentioned are clearly understood by those skilled in the art of the disclosure from the description of this document.

Effects obtained from the disclosure of this document are not limited to effects mentioned above, and other effects not mentioned are clearly understood by those skilled in the art to which this document belongs from the description of this document.

According to an embodiment of the disclosure, an electronic device including a lens assembly may be provided. The lens assembly 300; 400; 500; 600; 700 may include a lens group including a plurality of lenses L1, L2, L3, L4, L5 aligned along an optical axis O-I in a direction from an object O side toward an image I side, an image sensor IS including an imaging plane img on which the image I is formed, and at least one reflective member M. The first lens L1 from the object side among the plurality of lenses may have a positive refractive power, at least one of a surface S2 facing the object O side or a surface S3 facing the image I side of the first lens L1 may be formed as an aspherical surface, and the surface S2 facing the object side of the first lens L1 may be formed to be convex. A lens closest to the object side among at least one lens having a negative refractive power included in the lens group may have at least one of a surface facing the object side formed as an aspherical surface or a surface facing the image side formed as an aspherical surface, and the surface facing the image side may be formed to be concave. The lens assembly may satisfy following [Formula 1] to [Formula 3].$65 < L 1 Abbe < 81$$0.56 < EFL / OTTL < 1.33$$5 < FOV < 28$
(where L1 Abbe of [Formula 1] is an Abbe number of the first lens L1 from the object side among the plurality of lenses, OTTL of [Formula 2] is a distance from a vertex of a surface facing the object side of the first lens L1 to the image sensor, EFL of [Formula 2] is a total focal length of the lens assembly, and FOV of [Formula 3] is a total field of view of the lens assembly)

According to an embodiment, the lens assembly may satisfy following [Formula 4].$18 < LM 1 Abbe < 40$
(where LM1 Abbe of [Formula 4] is an Abbe number of a lens closest to the object side among at least one lens having a negative refractive power included in the lens group)

According to an embodiment, the lens assembly may satisfy following [Formula 5].$2.0 < EFL / L 1 R 1 < 5.5$
(where EFL is a total focal length of the lens assembly, and L1R1 is a curvature of a surface S2 of the first lens L1 facing the object side.

According to an embodiment, the electronic device may be configured to adjust a focus of the lens assembly by moving at least one of the plurality of lenses or at least one of the image sensor.

According to an embodiment, the at least one reflective member may be disposed between the first lens L1 from the object side and the second lens L2, or may be disposed facing a surface S2 facing the object side of the first lens L1 from the object side.

According to an embodiment, the lens assembly may further include an infrared cut filter F disposed between the lens group and the image sensor.

According to an embodiment, the at least one reflective member may be disposed between the lens group and the image sensor.

According to an embodiment, the electronic device may further include an infrared cut filter F disposed between the reflective member and the image sensor.

According to an embodiment, the at least one reflective member may include at least one of at least one mirror or at least one prism.

According to an embodiment, the at least one reflective member may be configured to reflect incident light at least once inside the at least one reflective member.

According to an embodiment, at least one lens among the plurality of lenses may include a glass material.

According to an embodiment, the first lens L1 from the object side among the plurality of lenses may be formed of a glass material.

According to an embodiment of the disclosure, a lens assembly 300; 400; 500; 600; 700 may be provided. The lens assembly may include a lens group including a plurality of lenses L1, L2, L3, L4, L5 aligned along an optical axis O-I in a direction from an object O side toward an image I side, an image sensor IS including an imaging plane img on which the image I is formed, and at least one reflective member M. The first lens L1 from the object side among the plurality of lenses may have a positive refractive power, at least one of a surface S2 facing the object O side or a surface S3 facing the image I side of the first lens L1 may be formed as an aspherical surface, and the surface S2 facing the object side of the first lens L1 may be formed to be convex. A lens closest to the object side among at least one lens having a negative refractive power included in the lens group may have at least one of a surface facing the object side formed as an aspherical surface or a surface facing the image side formed as an aspherical surface, and the surface facing the image side may be formed to be concave. The lens assembly may satisfy following [Formula 1] to [Formula 3].$65 < L 1 Abbe < 81$$0.56 < EFL / OTTL < 1.33$ $5 < FOV < 28$
(where L1 Abbe of [Formula 1] is an Abbe number of the first lens L1 from the object side among the plurality of lenses, OTTL of [Formula 2] is a distance from a vertex of a surface facing the object side of the first lens L1 to the image sensor, EFL of [Formula 2] is a total focal length of the lens assembly, and FOV of [Formula 3] is a total field of view of the lens assembly)

According to an embodiment, the lens assembly may satisfy following [Formula 4].$18 < LM 1 Abbe < 40$ (where LM1 Abbe of [Formula 4] is an Abbe number of a lens closest to the object side among at least one lens having a negative refractive power included in the lens group)

According to an embodiment, the lens assembly may satisfy following [Formula 5].$2.0 < EFL / L 1 R 1 < 5.5$ (where EFL is a total focal length of the lens assembly, and L1R1 is a curvature of a surface S2 facing the object side of the first lens L1)

According to an embodiment, the lens assembly may be configured to focus by moving at least one of the plurality of lenses or at least one of the image sensor.

According to an embodiment, the at least one reflective member may be disposed between the first lens L1 from the object side and the second lens L2, or may be disposed facing a surface S2 facing the object side of the first lens L1 from the object side.

According to an embodiment, the at least one reflective member may be disposed between the lens group and the image sensor.

According to an embodiment, the at least one reflective member may include at least one of at least one mirror or at least one prism.

According to an embodiment, at least one lens among the plurality of lenses may include a glass material.

An embodiment of the disclosure should be understood as an example rather than limiting the disclosure. It is apparent to those skilled in the art that various changes may be made in form and details, including the appended claims and their equivalents, without departing from the overall scope disclosed in the disclosure.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Terms such as "first", "second", or "first" or "second" may be used simply to distinguish the corresponding component from another corresponding component, and do not limit the corresponding components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{TM}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device including a lens assembly,
wherein the lens assembly (300; 400; 500; 600; 700) comprises: a lens group which includes a plurality of lenses (L1, L2, L3, L4, L5) aligned along an optical axis (O-I) in a direction from an object (O) side to an image (I) side;
an image sensor (IS) including an imaging plane (img) on which an image (I) is formed; and
at least one reflective member (M),
wherein a first lens (L1), closest to the object side among the plurality of lenses, has positive refractive power and at least one of a surface (S2) of the first lens (L1) facing the object (O) side or a surface (S3) of the first lens (L1) facing the image (I) side is formed as an aspherical surface, and the surface (S2) of the first lens (L1) facing the object side is formed to be convex,
wherein among at least one lens having negative refractive power included in the lens group, a lens closest to the object side has at least one of a surface facing the object side formed as an aspherical surface or a surface facing the image side formed as an aspherical surface, and has a surface facing the image side formed to be concave, and
wherein the lens assembly satisfies the following [formula 1] to [formula 3]. $65 < L 1 Abbe < 81$ $0.56 < EFL / OTTL < 1.33$ $5 < FOV < 28$
(here, L1 Abbe in [formula 1] is the Abbe number of the first lens (L1) from the object side among the plurality of lenses, OTTL in [formula 2] is a distance from the vertex of the surface facing the object side of the first lens (L1) to the image sensor, EFL in [formula 2] is a total focal length of the lens assembly, and FOV in [formula 3] is a total field of view of the lens assembly).

2. The electronic device of claim 1, wherein the lens assembly satisfies the following [formula 4]: $18 < LM 1 Abbe < 40$ (here, LM1 Abbe in [formula 4] is the Abbe number of the lens closest to the object side among at least one lens having negative refractive power included in the lens group).

3. The electronic device of claim 1 or 2, wherein the lens assembly satisfies the following [formula 5]: $2.0 < EFL / L 1 R 1 < 5.5$ (here, EFL is the total focal length of the lens assembly, and L1R1 is the curvature of the surface (S2) facing the object side of the first lens (L1)).

4. The electronic device of any one of claims 1 to 3, wherein the electronic device is configured to adjust a focus of the lens assembly by moving at least one of at least one lens among the plurality of lenses or the image sensor.

5. The electronic device of any one of claims 1 to 4, wherein the at least one reflective member is disposed between the first lens (L1) and the second lens (L2) from the object side, or is disposed to face the surface (S2) of the first lens (L1) facing the object side.

6. The electronic device of any one of claims 1 to 5, wherein the lens assembly further comprises an infrared cut-off filter (F) disposed between the lens group and the image sensor.

7. The electronic device of any one of claims 1 to 4, wherein the at least one reflective member is disposed between the lens group and the image sensor.

8. The electronic device of claim 7, further comprising an infrared cut-off filter (F) disposed between the reflective member and the image sensor.

9. The electronic device of any one of claims 1 to 8, wherein the at least one reflective member includes at least one of at least one mirror or at least one prism.

10. The electronic device of any one of claims 1 to 9, wherein the at least one reflective member is configured to reflect incident light at least once inside the at least one reflective member.

11. The electronic device of any one of claims 1 to 10, wherein at least one lens among the plurality of lenses includes a glass material.

12. The electronic device of any one of claims 1 to 11, wherein the first lens (L1) from the object side among the plurality of lenses is formed of a glass material.

13. A lens assembly (300; 400; 500; 600; 700), comprising:
a lens group including a plurality of lenses (L1, L2, L3, L4, L5) aligned along an optical axis (O-I) in a direction from an object (O) side toward an image (I) side;
an image sensor (IS) including an imaging plane (img) on which the image (I) is formed; and
at least one reflective member (M), wherein
the first lens (L1) from the object side among the plurality of lenses has a positive refractive power, at least one of a surface (S2) facing the object (O) side or a surface (S3) facing the image (I) side of the first lens (L1) is formed as an aspherical surface, and the surface (S2) facing the object side of the first lens (L1) is formed to be convex,
a lens closest to the object side among at least one lens having a negative refractive power included in the lens group has at least one of a surface facing the object side formed as an aspherical surface or a surface facing the image side formed as an aspherical surface, and the surface facing the image side is formed to be concave, and
the lens assembly satisfies following [Formula 1] to [Formula 3]: $65 < L 1 Abbe < 81$ $0.56 < EFL / OTTL < 1.33$ $5 < FOV < 28$
(where L1 Abbe of [Formula 1] is an Abbe number of the first lens (L1) from the object side among the plurality of lenses, OTTL of [Formula 2] is a distance from a vertex of the surface facing the object side of the first lens (L1) to the image sensor, EFL of [Formula 2] is a total focal length of the lens assembly, and FOV of [Formula 3] is a total field of view of the lens assembly).

14. The lens assembly of claim 13, wherein
the lens assembly satisfies following [Formula 4]: $18 < LM 1 Abbe < 40$
(where LM1 Abbe of [Formula 4] is an Abbe number of a lens closest to the object side among at least one lens having a negative refractive power included in the lens group).

15. The lens assembly of claim 13 or claim 14, wherein
the lens assembly satisfies following [Formula 5]: $2.0 < EFL / L 1 R 1 < 5.5$
(where EFL is a total focal length of the lens assembly, and L1R1 is a curvature of the surface (S2) facing the object side of the first lens (L1)).
